(19) Europäisches Patentamt
European Patent Office
Office européen des brevets

(11) **EP 4 535 889 A1**

(12) **EUROPEAN PATENT APPLICATION**
published in accordance with Art. 153(4) EPC

(43) Date of publication:
**09.04.2025 Bulletin 2025/15**

(21) Application number: **22943161.4**

(22) Date of filing: **26.05.2022**

(51) International Patent Classification (IPC):
**H04W 72/04** *(2023.01)* **H04W 88/12** *(2009.01)*

(52) Cooperative Patent Classification (CPC):
**H04W 72/04; H04W 88/12**

(86) International application number:
**PCT/CN2022/095358**

(87) International publication number:
**WO 2023/225961 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• LI, Yapu
  **Dongguan, Guangdong 523860 (CN)**
• HUANG, Lei
  **Singapore 049483 (SG)**

(74) Representative: **RGTH
Patentanwälte PartGmbB
Neuer Wall 10
20354 Hamburg (DE)**

(54) **COMMUNICATION METHOD AND DEVICE**

(57) The present application relates to a communication method and device. The communication method comprises: a communication device sending and/or receiving first information, the first information being used to enable an extended range (ER). The embodiment of the present application can extend the transmission distance.

**300**

> A communications device sends and/or receives first information, where the first information is used for an extended range (ER) — S310

**FIG. 3**

## Description

### TECHNICAL FIELD

This application relates to the communications field, and more specifically, to a communication method and a communications device.

### BACKGROUND

Communications standards have defined a plurality of types of RUs (Resource Unit, resource unit), and also MRUs (Multiple Resource Unit, multiple resource unit) including a plurality of RUs. In an outdoor scenario, some RUs may correspond to revaltively long uplink transmission distancesis relatively long, but relatively low data rates, while some other RUs correspond to relatively high maximum data rates, but relatively short uplink transmission distances, which are difficult to meet a requirement for both a long distance and a high data rate in some transmission scenarios.

### SUMMARY

Embodiments of this application provide a connection configuration method and a terminal.

An embodiment of this application provides a communication method, including:

A communications device sends and/or receives first information, where the first information is used for an extended range ER.

An embodiment of this application further provides a communications device, including:

a communications unit, configured to send and/or receive first information, where the first information is used for an extended range ER.

An embodiment of this application further provides a communications device, including a processor and a memory. The memory is configured to store a computer program, and the processor is configured to invoke and run the computer program stored in the memory, to cause the communications device to execute the foregoing method.

An embodiment of this application further provides a chip, including a processor, configured to invoke a computer program from a memory and run the computer program, to cause a device on which the chip is installed to execute the foregoing method.

An embodiment of this application further provides a computer-readable storage medium, configured to store a computer program. When the computer program is run by a device, the device is caused to execute the foregoing method.

An embodiment of this application further provides a computer program product, including computer program instructions, and the computer program instructions cause a computer to execute the foregoing method.

An embodiment of this application further provides a computer program, and the computer program causes a computer to execute the foregoing method.

In embodiments of this application, a transmission distance can be extended based on first information.

### BRIEF DESCRIPTION OF DRAWINGS

FIG. 1 is a schematic diagram of an application scenario according to an embodiment of this application.
FIG. 2 is a schematic diagram of a format of an HE ER SU PPDU.
FIG. 3 is a schematic flowchart of a communication method according to an embodiment of this application.
FIG. 4 is a schematic block diagram of a communications device according to an embodiment of this application.
FIG. 5 is a schematic diagram of an example of a distributed RU.
FIG. 6 is an overall structural diagram of an example of a UHT ER PPDU.
FIG. 7 is a structural diagram of an example of a format 1 of a UHT ER PPDU.
FIG. 8 is a structural diagram of an example of a U-SIG field.
FIG. 9 is a structural diagram of an example of a UHT-SIG field.
FIG. 10 is a structural diagram of an example of a format 2 of a UHT ER PPDU.
FIG. 11 is a schematic block diagram of a communications device according to an embodiment of this application.
FIG. 12 is a schematic block diagram of a chip according to an embodiment of this application.
FIG. 13 is a schematic block diagram of a communications system according to an embodiment of this application.

## DESCRIPTION OF EMBODIMENTS

The following describes the technical solutions in embodiments of this application in combination with the accompanying drawings in embodiments of this application.

For abbreviations and meanings of some nouns in embodiments of this application, refer to the table below.

| Abbreviation | English Full Name |
|---|---|
| PPDU | Physical Layer Protocol Data Unit |
| IEEE | Institute of Electrical and Electronics Engineers |
| RU | Resource unit |
| MRU | Multiple resource unit |
| AP | Access point |
| STA | Station |
| BSS | Basic service set |
| TXOP | Transmission opportunity |
| PSD | Power Spectral Density |
| DCM | Dual carrier modulation |
| UMi | Urban Microcell |
| NLoS | Non-line of sight |
| HE | High throughput |
| EHT | Extremely high throughput |
| UHT | Ultra-High Throughput |
| PPDU | Physical Layer Protocol Data Unit |
| CRC | Cyclic redundancy code |
| DL | Downlink |
| UL | Uplink |
| BW | Bandwidth |
| GI | Guard interval |
| MCS | Modulation and coding scheme |
| OFDMA | Orthogonal frequency division multiple access |
| MU | Multi-user |
| MIMO | Multiple Input Multiple Output |
| RF | Radio Frequency |
| DC | Direct current |
| TB | Trigger based |
| L-LTF | Non-HT Long Training field |
| L-STF | Non-HT Short Training field |
| L-SIG | Non-HT SIGNAL field |
| RL-SIG | Repeated L-SIG |
| EHT-SIG | EHT SIGNAL field |
| U-SIG | Universal SIGNAL field |
| EHT-STF | EHT Short Training field |
| EHT-LTF | EHT Long Training field |

(continued)

| Abbreviation | English Full Name |
|---|---|
| UHT-SIG | UHT SIGNAL field |
| UHT-STF | UHT Short Training field |
| UHT-LTF | UHT Long Training field |
| PE | Packet Extension field |
| BPSK | Binary Phase Shift Keying |
| QBPSK | Quadrature Binary Phase Shift Keying |
| QPSK | Quadrature Phase Shift Keying |
| SNR | Signal to Noise Ratio |

The technical solutions in embodiments of this application may be applied to various communications systems, for example, a wireless local area network (WLAN), wireless fidelity (Wireless Fidelity, Wi-Fi), or another communications system.

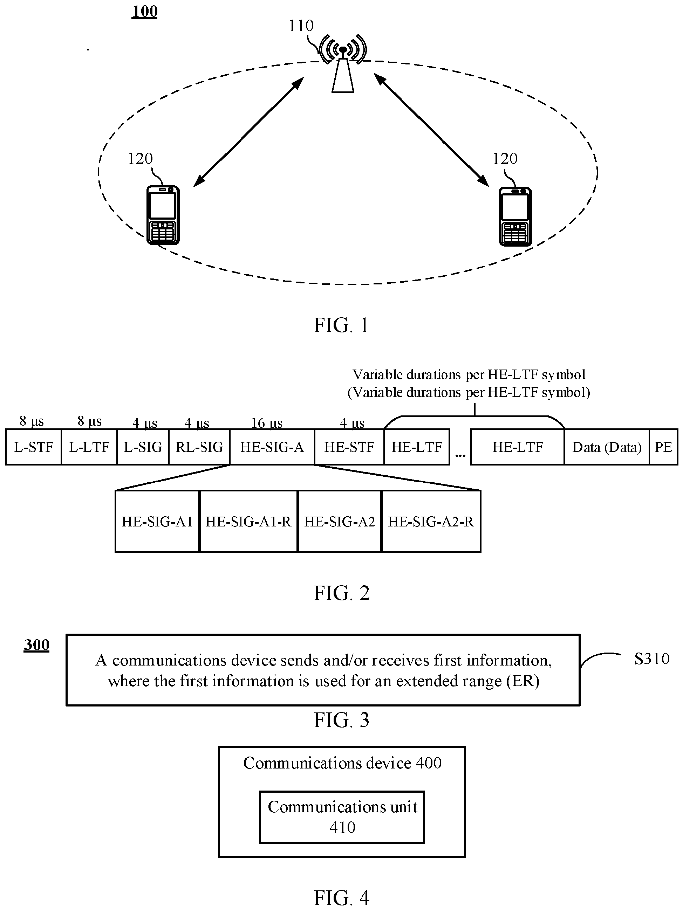

For example, FIG. 1 shows a communications system 100 to which an embodiment of this application is applied. The communications system 100 may include an access point (Access Point, AP) 110 and stations (STATION, STA) 120 that access a network by using the access point 110.

In some scenarios, an AP is referred to as an AP STA. That is, in a sense, the AP is also a STA.

In some scenarios, a STA is referred to as a non-AP STA (non-AP STA).

Communication in the communications system 100 may be communication between an AP and a non-AP STA, or may be communication between a non-AP STA and a non-AP STA, or may be communication between a STA and a peer STA. The peer STA may refer to a peer communications device of the STA. For example, the peer STA may be an AP, or may be a non-AP STA.

An AP is equivalent to a bridge that connects a wired network and a wireless network. A major function of the AP is to connect clients in a wireless network together and then connects the wireless network to an Ethernet. An AP device may be a terminal device (for example, a mobile phone) or a network device (for example, a router). The terminal device or the network device has a chip such as a WLAN or Wi-Fi chip for implementing a communication function.

It should be understood that a role of a STA in a communications system is not fixed. For example, in some scenarios, when a mobile phone is connected to a route, the mobile phone is a non-AP STA; and when the mobile phone serves as a hotspot for another mobile phone, the mobile phone serves as an AP.

The AP and the non-AP STA may be devices applied in vehicle-to-everything; internet of things nodes, sensors, and the like in internet of things (Internet Of Things, IoT); intelligent cameras, intelligent remote controls, intelligent water meters, intelligent electricity meters, and the like in smart home; and sensors and the like in smart city.

In some embodiments, the non-AP STA may support an 802.11be standard. The non-AP STA may also support a plurality of current and future wireless local area network (wireless local area network, WLAN) standards of an 802.11 family, such as 802.11ax, 802.11ac, 802.11n, 802.11g, 802.11b, and 802.11a.

In some embodiments, the AP may be a device that supports the 802.11be standard. The AP may alternatively be a device that supports a plurality of current and future WLAN standards of the 802.11 family, such as 802.11ax, 802.11ac, 802.11n, 802.11g, 802.11b, and 802.11a.

In embodiments of this application, the STA may be a device that supports a WLAN or Wi-Fi technology, such as a mobile phone (Mobile Phone), a tablet computer (Pad), a computer, a virtual reality (Virtual Reality, VR) device, an augmented reality (Augmented Reality, AR) device, a wireless device in industrial control (industrial control), a set-top box, a wireless device in self-driving (self driving), a vehicle-mounted communications device, a wireless device in remote medical (remote medical), a wireless device in smart grid (smart grid), a wireless device in transportation safety (transportation safety), a wireless device in smart city (smart city), a wireless device in smart home (smart home), a wireless communications chip, an ASIC, or a SoC.

Frequency bands supported in the WLAN technology may include but are not limited to a low frequency band (for example, 2.4 GHz, 5 GHz, or 6 GHz) and a high frequency band (for example, 45 GHz or 60 GHz).

FIG. 1 exemplarily shows one AP STA and two non-AP STAs. Optionally, the communications system 100 may include a plurality of AP STAs and another quantity of non-AP STAs. This is not limited in embodiments of this application.

It should be understood that the terms "system" and "network" in this specification may often be used interchangeably in this specification. In this specification, the term "and/or" is merely an association relationship that describes associated objects, and represents that there may be three relationships. For example, A and/or B may represent three cases: Only A exists, both A and B exist, and only B exists. In addition, the character "/" in this specification generally indicates an "or" relationship between the associated objects.

It should be understood that, the "indication" mentioned in embodiments of this application may be a direct indication or an indirect indication, or may indicate an association. For example, A indicates B, which may mean that A directly indicates B, for example, B can be obtained by means of A; or may mean that A indirectly indicates B, for example, A indicates C, and B can be obtained by means of C; or may mean that there is an association relationship between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

To facilitate understanding of the technical solutions in embodiments of this application, the following describes related technologies in embodiments of this application. The following related technologies may be randomly combined with the technical solutions in embodiments of this application as optional solutions, which are all within the protection scope of embodiments of this application.

An HE (High throughput, high throughput) ER (extended range, extended range) SU (Single-User, single-user) PPDU (Physical Layer Protocol Data Unit, physical layer protocol data unit) is used for extending a transmission distance (which may also be referred to as extending a range, expending a range, or the like). FIG. 2 shows an example of a format of an HE ER SU PPDU. The HE ER SU PPDU is used for single-user transmission. An L-STF (Non-HT Short Training, non-high throughput short training) field, an L-LTF (Non-HT Long Training, non-high throughput long training) field, an L-SIG (Non-HT SIGNAL, non-high throughput signal) field, an HE-SIG-A field, and an HE-SIG-B field are referred to as pre-HE (preamble high throughput) modulated fields. An HE-STF (high throughput short training) field, an HE-LTF (high throughput long training) field, a Data (data) field, and a PE (Package Extend, packet extension) field are referred to as HE modulated fields.

A main working principle of the HE ER SU PPDU for extending the transmission distance is as follows:

1) Powers of the L-STF and L-LTF fields are increased by 3 dB;
2) The L-SIG is repeatedly sent in time domain, namely, in an L-SIG+RL-SIG mode, to improve a PER of the L-SIG;
3) The HE-SIG-A is repeatedly sent in time domain, and specifically includes four subfields: an HE-SIG-A1, an HE-SIG-A1-R, an HE-SIG-A2, and an HE-SIG-A2-R, each subfield including 26 data bits.

-R (Repeat) indicates repetition. The HE-SIG-A1-R is a replication of the HE-SIG-A1, the HE-SIG-A2-R is a replication of the HE-SIG-A2, and a power gain can be obtained in a replication and combination mode.

In addition, data bits in the HE-SIG-A1 and the HE-SIG-A2 are encoded by using a BCC (Binary Convolutional Code, binary convolutional code) at a coding rate of 1/2, processed by a BCC interleaver, and mapped to BPSK (Binary Phase Shift Keying, binary phase shift keying) constellation points. The HE-SIG-A1-R is not processed by an interleaver, and is mapped to a QBPSK (Quadrature Binary Phase Shift Keying, orthogonal binary phase shift keying) constellation point (for distinguishing between HE SU PPDUs); and the HE-SIG-A2-R is not processed by an interleaver, and is mapped to a BPSK constellation point. Additional frequency diversity gains can be obtained by using different interleaving schemes.

4) Powers of the HE-STF and HE-LTF fields are increased by 3 dB.

For example, the HE ER SU PPDU is allowed to be transmitted on a higher-frequency RU106 (an RU with 106 tones or a 106-tone RU) or an RU242 (an RU with 242 tones or a 242-tone RU) on a primary 20 MHz channel. Specifically, for example, when the HE ER SU PPDU is transmitted on the RU106, if MCS (Modulation and Coding Scheme, modulation and coding scheme) is 0, DCM (dual carrier modulation, Dual carrier modulation) may be used. When the HE ER SU PPDU is transmitted on the RU242, if MCS is 0, 1, or 2, DCM may be used, and the HE ER SU PPDU can be transmitted on only one spatial stream.

For example, a path loss (path loss) model in an outdoor UMi (Urban Microcell, urban microcell) NLoS (Non-line of sight, non-line of sight) scenario is used. A corresponding uplink transmission distance is calculated based on a maximum data rate of the HE ER SU PPDU on an allowed RU , as shown in Table 1.

**Table 1 Data rates and uplink transmission distances of the HE ER SU PPDU in an outdoor scenario**

| HE-MCS | RU106 | | RU242 | |
|---|---|---|---|---|
| | Maximum data rate (Mb/s) | Transmission distance (m) | Maximum data rate (Mb/s) | Transmission distance (m) |
| MCS 0+DCM | 1.8 | 52.5 | 4.3 | 52.5 |
| MCS 0 | 3.8 | 52.5 | 8.6 | 52.5 |
| MCS 1+DCM | \ | \ | 8.6 | 52.5 |

(continued)

| HE-MCS | RU106 | | RU242 | |
|---|---|---|---|---|
| | Maximum data rate (Mb/s) | Transmission distance (m) | Maximum data rate (Mb/s) | Transmission distance (m) |
| MCS 1 | \ | \ | 17.2 | 43.5 |
| MCS 2 | \ | \ | 25.8 | 38.4 |

It can be learned from Table 1 that, in the outdoor scenario, the maximum data rate of the RU106 is 3.8 Mb/s, and the corresponding uplink transmission distance is 52.5 m, which has a relatively low data rate; and the maximum data rate of the RU242 is 25.8 Mb/s, and the corresponding uplink transmission distance is 38.4 m, which has a relatively short transmission distance. In this case, it may be difficult to meet requirements for both a long distance and a high data rate in some transmission scenarios, for example, an outdoor video surveillance scenario.

FIG. 3 is a schematic flowchart of a communication method 300 according to an embodiment of this application. Optionally, the method may be applied to the system shown in FIG. 1, but is not limited thereto. The method includes at least a part of the following content.

S310: A communications device sends and/or receives first information, where the first information is used for an extended range (ER).

In this embodiment of this application, the communications device may include an access point station (an AP for short), a non-access point station (a STA for short), and/or the like. To ensure a transmission distance and a data transmission rate, communication may be performed between the AP and the STA based on the first information. For example, the AP may send the first information to the STA, and the AP may also receive the first information sent by the STA. For another example, the STA may send the first information to the AP, and the STA may also receive the first information sent by the AP.

In an implementation, the first information is a physical layer protocol data unit (PPDU).

In an implementation, a bandwidth of the PPDU may be 20 MHz, 40 MHz, 80 MHz, or the like. In this embodiment of this application, a specific bandwidth value of the PPDU is not limited. An effect of exending range is significant for the PPDUon a 20 MHz bandwidth.

In an implementation, the PPDU is a UHT (Ultra-High Throughput, ultra-high throughput) ER PPDU. The UHT ER PPDU may be used in scenarios such as ultra-high throughput and long-distance transmission.

In an implementation, a resource unit RU allocation mode of the PPDU includes a non-distributed RU allocation mode and/or a distributed RU allocation mode.

In this embodiment of this application, the RU allocation mode may be referred to as an RU mode, the non-distributed RU allocation mode may be referred to as a conventional RU allocation mode, a conventional RU mode, or a non-distributed RU mode, and the distributed RU allocation mode may be referred to as a distributed RU mode. The distributed RU allocation mode may be used for mapping RUs of a PPDU onto an entire bandwidth of the PPDU in a distributed manner. For example, continuous physical tone indexes of a non-distributed RU are mapped to discontinuous physical tone indexes to obtain a distributed RU. Physical tone indexes of the distributed RU are distributed on an entire bandwidth of the PPDU, for example, 20 MHz. The non-distributed RU allocation mode, for example, a conventional RU allocation mode in an IEEE 802.11be standard, may be used for allocation based on the non-distributed RU.

In an implementation, in the distributed RU allocation mode, the PPDU is allowed to be transmitted on an RU with 106 tones (which may be referred to as a 106-tone RU or an RU106) and/or an MRU with 106 tones + 26 tones (which may be referred to as a 106+26-tone MRU or an MRU106+26). For example, the RU106 may be a 106-tone RU in upper frequency domain within a 20 MHz bandwidth, and the MRU106+26 may be a 106+26-tone MRU in upper frequency domain within a 20 MHz bandwidth.

In an implementation, in the non-distributed RU allocation mode, the PPDU is allowed to be transmitted on at least one of an RU with 106 tones, an MRU with 106 tones + 26 tones, or an RU with 242 tones (which may be referred to a 242-tone RU or an RU242). For example, continuous tones in the RU106 or the MRU106+26 are mapped to discontinuous tones within a 20 MHz bandwidth according to a pre-specified mapping rule.

In the above RU allocation modes, the types of RUs that are allowed to be used for transmitting the PPDU are only examples rather than limitations, and another type of RU may be used according to an actual scenario. For example, an RU26 (which may be referred to as an RU with 26 tones or a 26-tone RU), an RU52 (an RU with 52 tones or a 52-tone RU), an MRU52+26 (an RU with 52 tones + 26 tones or a 52+26-tone RU), or the like may be used for transmitting a UHT ER PPDU.

In an implementation, in different RU allocation modes, modulation and coding schemes allowed to be applied to the PPDU are different. For example, the distributed RU allocation mode and the non-distributed RU allocation mode may correspond to respective modulation and coding schemes.

In an implementation, in the distributed RU allocation mode, a modulation and coding scheme allowed to be applied to the PPDU includes at least one of the following:

an MCS 0: BPSK modulation, and a coding rate of 1/2;
an MCS 1: QPSK (Quadrature Phase Shift Keying, quadrature phase shift keying) modulation, and a coding rate of 1/2;
an MCS 2: QPSK modulation, and a coding rate of 3/4; or
an MCS 15: BPSK-DCM modulation, and a coding rate of 1/2.

For example, in the distributed RU allocation mode, when a UHT ER PPDU is transmitted on an RU106 or an MRU106+26, a modulation and coding scheme allowed to be applied is at least one of an MCS 0, an MCS 1, an MCS 2, or an MCS 15.

In an implementation, in the non-distributed RU allocation mode, a modulation and coding scheme includes at least one of the following:

a modulation and coding scheme allowed to be applied to the PPDU to be transmitted on an RU with 106 tones and/or an MRU with 106 tones + 26 tones is at least one of an MCS 0 or an MCS 15; or
a modulation and coding scheme allowed to be applied to the PPDU to be transmitted on an RU with 242 tones is at least one of an MCS 0, an MCS 1, an MCS 2, or an MCS 15.

In an implementation, the PPDU includes a signal (Signal, SIG) field used for carrying information for decoding the PPDU.

In this embodiment of this application, the SIG field may include the information for decoding the PPDU.

In an implementation, the SIG field includes a universal signal (U-SIG, Universal SIGNAL field) field.

In an implementation, the SIG field further includes a UHT-SIG (UHT SIGNAL, ultra-high throughput signal) field.

For example, in a format 1 of the UHT ER PPDU, the information for decoding the PPDU is indicated by the U-SIG field and the UHT-SIG field. For another example, in a format 2 of the UHT ER PPDU, the information for decoding the PPDU is indicated by the U-SIG field alone. Depending on different SIG fields and considering signalling overheads and receiver complexity, a variety of different UHT ER PPDU formats may be provided, for example:

a format 1: a mode of the U-SIG field and the UHT-SIG field. The UHT-SIG field in the UHT ER PPDU may use BPSK-DCM modulation and a coding rate of 1/2.
a format 2: a mode of the U-SIG field.

In an implementation, the U-SIG field includes a first subfield used to indicate an RU allocation mode and RU allocation information.

In an implementation, a value of the first subfield indicates at least one of following:

a distributed RU with 106 tones;
a distributed MRU with 106 tones + 26 tones;
a non-distributed RU with 106 tones;
a non-distributed MRU with 106 tones + 26 tones;
a non-distributed RU with 242 tones; or
reserved.

In an implementation, the distributed RU with the 106 tones includes tones obtained by distributed mapping of an RU with 106 tones in upper frequency domain within a 20 MHz bandwidth;

the distributed MRU with the 106 tones + the 26 tones includes tones obtained by distributed mapping of an MRU with 106 tones + 26 tones in upper frequency domain within a 20 MHz bandwidth;
the non-distributed RU with the 106 tones includes an RU with 106 tones in upper frequency domain within a 20 MHz bandwidth; or
the non-distributed MRU with the 106 tones + the 26 tones includes an MRU with 106 tones + 26 tones in upper frequency domain within a 20 MHz bandwidth.

In this embodiment of this application, the first subfield may indicate both the RU allocation mode and the RU allocation information. Different values of the first subfield respectively correspond to different RU allocation modes and different RU allocation information. For example, the first subfield may be a bandwidth (Bandwidth) subfield of the UHT ER PPDU. A value of the Bandwidth subfield is 0, indicating the tones obtained by distributed mapping of a 106-tone RU in upper frequency domain within a 20 MHz bandwidth. A value of the Bandwidth subfield is 1, indicating the tones obtained by distributed mapping of a 106+26-tone MRU in upper frequency domain within a 20 MHz bandwidth. A value of the Bandwidth subfield is 2, indicating the 106-tone RU in upper frequency domain within a 20 MHz bandwidth. A value of the Bandwidth subfield is 3, indicating the 106+26-tone MRU in upper frequency domain within a 20 MHz bandwidth. A field name, a value, and a corresponding meaning of the first subfield are merely examples but not limitations, and may be flexibly specified according to an actual use requirement.

In an implementation, the U-SIG field includes:

a second subfield used to indicate RU allocation information; and
a third subfield used to indicate an RU allocation mode.

In an implementation, a value of the second subfield indicates at least one of following:

an RU with 106 tones;
an MRU with 106 tones + 26 tones;
an RU with 242 tones; or
reserved.

In an implementation, the RU with the 106 tones includes an RU with 106 tones in upper frequency domain within a 20 MHz bandwidth; or
the MRU with the 106 tones + the 26 tones includes an MRU with 106 tones + 26 tones in upper frequency domain within a 20 MHz bandwidth.

In this embodiment of this application, the RU allocation mode and the RU allocation information may be separately indicated by the two subfields in the U-SIG field.

For example, the second subfield used to indicate the RU allocation information may be a bandwidth Bandwidth subfield of the UHT ER PPDU. A value of the Bandwidth subfield is 0, indicating the 106-tone RU in upper frequency domain within a 20 MHz bandwidth. A value of the Bandwidth subfield is 1, indicating the 106+26-tone MRU in upper frequency domain within a 20 MHz bandwidth. A value of the Bandwidth subfield is 2, indicating the 242-tone RU in upper frequency domain within a 20 MHz bandwidth.

In an implementation, a value of the third subfield indicates at least one of following:

a non-distributed RU allocation mode; or
a distributed RU allocation mode.

For example, the third subfield used to indicate the RU allocation mode may be a bandwidth RU allocation mode (RU allocation mode) subfield of the UHT ER PPDU. A value of the RU allocation mode subfield is 0, indicating the non-distributed RU allocation mode. A value of the RU allocation mode subfield is 1, indicating the distributed RU allocation mode.

The above field names, values, and corresponding meanings of the second subfield and/or the third subfield are merely examples but not limitations, and may be flexibly specified according to an actual use requirement.

In an implementation, in a case that the second subfield indicates an RU with 242 tones, the third subfield indicates the non-distributed RU allocation mode. For example, when a value of a Bandwidth subfield in the UHT ER PPDU is 2 (indicating an RU242), the value of the RU allocation mode subfield can only indicate the non-distributed RU allocation mode. For example, the value of the RU allocation mode subfield can only be 0. If the value of the RU allocation mode subfield is 1, it indicates a reserved field that is validated (Validated).

In an implementation, if the U-SIG field and the UHT-SIG field are used to indicate the information for decoding the PPDU, the UHT-SIG field includes a fourth subfield used to indicate an MCS applied to a data domain of the PPDU.

In this embodiment of this application, the UHT-SIG field may mainly include a common field (common field) and a user field (user field). The UHT-SIG field may further include fields such as a CRC and a tail (Tail).

For example, in the user field, the fourth subfield may be an MCS subfield, indicating an MCS applied to a data domain of the UHT ER PPDU. For example, a value of the MCS subfield is 0, indicating that the modulation and coding scheme applied to a data domain of the UHT ER PPDU is an MCS 0. A value of the MCS subfield is 1, indicating that the modulation and coding scheme applied to a data domain of the UHT ER PPDU is an MCS 1. A value of the MCS subfield is 2, indicating that the modulation and coding scheme applied to a data domain of the UHT ER PPDU is an MCS 2. A value of the MCS subfield is 3, indicating that the modulation and coding scheme applied to a data domain of the UHT ER PPDU is an MCS 15. The above field names, values, and corresponding meanings of the fourth subfield are merely examples but not limitations, and may be flexibly specified according to an actual use requirement.

In an implementation, if the U-SIG field and the UHT-SIG field are used to indicate the information for decoding the PPDU, the U-SIG field further includes a fifth subfield used to indicate a modulation and coding scheme applied to the UHT-SIG field.

In an implementation, a value of the fifth subfield indicates at least one of following:

an MCS 15: BPSK-DCM, and a coding rate of 1/2; or
reserved.

In an example, in a format 1, if the UHT ER PPDU includes a U-SIG field and a UHT-SIG field, the U-SIG field may include a fifth subfield used to indicate a modulation and coding scheme of the UHT-SIG field. For example, the fifth subfield may be a UHT-SIG MCS subfield. To obtain a same gain as a replication structure in the U-SIG, a value of the UHT-SIG MCS subfield is set to 0, which may indicate that a modulation and coding scheme is an MCS 15, which means modulation and coding by using BPSK-DCM and a coding rate of 1/2. The above field name, value, and corresponding meaning of the fifth subfield are merely examples but not limitations, and may be flexibly specified according to an actual use requirement.

In an implementation, if only the U-SIG field is used to indicate the information for decoding the PPDU, the U-SIG field further includes a fourth subfield used to indicate an MCS applied to a data domain of the PPDU.

For example, in a format 2, only the U-SIG field in the UHT ER PPDU is used to indicate an RU allocation mode, RU allocation information, and an MCS applied to a data domain of the PPDU. For example, the first subfield, for example, a Bandwidth subfield, indicates both the RU allocation mode and the RU allocation information. The fourth subfield, for example, an MCS subfield, indicates the MCS applied to a data domain of the PPDU.

In an implementation, in a case that a value of the first subfield indicates a non-distributed RU with 106 tones, a value of the fourth subfield indicates an MCS 0 or an MCS 15; and/or in a case that a value of the first subfield indicates a non-distributed MRU with 106 tones + 26 tones, a value of the fourth subfield indicates an MCS 0 or an MCS 15.

For example, if a value of the Bandwidth subfield is 2, indicating a non-distributed RU106, or if a value of the Bandwidth subfield is 3, indicating a non-distributed MRU106+26, a value of the MCS subfield is 0 or 3, indicating that a modulation and coding scheme may be an MCS 0 or an MCS 15. If a value of the MCS subfield is 1 or 2, it indicates Validated.

For example, in a format 2, two subfields of the U-SIG field in the UHT ER PPDU respectively indicate an RU allocation mode and RU allocation information. For example, the second subfield, for example, a Bandwidth subfield, indicates the RU allocation information. The third subfield, for example, an RU allocation mode subfield, indicates the RU allocation information. The fourth subfield, for example, an MCS subfield, indicates the MCS applied to a data domain of the PPDU.

In an implementation, a value of the fourth subfield indicates at least one of following:

an MCS 0: BPSK modulation, and a coding rate of 1/2;
an MCS 1: QPSK modulation, and a coding rate of 1/2;
an MCS 2: QPSK modulation, and a coding rate of 3/4;
an MCS 15: BPSK-DCM modulation, and a coding rate of 1/2; or
reserved.

In an implementation, in a case that a value of the second subfield indicates an RU with 106 tones and a value of the third subfield indicates a non-distributed RU allocation mode, the fourth subfield indicates an MCS 0 or an MCS 15; and/or in a case that a value of the second subfield indicates an MRU with 106 tones + 26 tones and a value of the third subfield indicates a non-distributed RU allocation mode, the fourth subfield indicates an MCS 0 or an MCS 15.

For example, if a value of the second subfield, namely, the Bandwidth subfield, is 0 or 1 and a value of the third subfield, namely, the RU allocation mode subfield, is 0 (indicating a non-distributed RU106 or a non-distributed MRU106+26), the fourth subfield may indicate only an MCS 0 or an MCS 15. If a value of the MCS subfield is 1 or 2, it indicates Validated.

In an implementation, an OFDM (Orthogonal Frequency Division Multiplexing, orthogonal frequency division multiplexing) symbol included in the U-SIG field is at least one of a U-SIG-1, a U-SIG-1-R, a U-SIG-2, or a U-SIG-2-R. -R (Repeat) indicates repetition. For example, the U-SIG-1-R is a duplicate symbol of the U-SIG-1, and the U-SIG-2-R is a duplicate symbol of the U-SIG-2.

In an implementation, the OFDM symbol included in the U-SIG field is encoded by using a BCC at a coding rate of 1/2.

In an implementation, the U-SIG-1 and the U-SIG-1-R carry same bit information, and the U-SIG-2 and the U-SIG-2-R carry same bit information.

In an implementation, the U-SIG-1 and the U-SIG-2 are interleaved by an interleaver, and the U-SIG-1-R and the U-SIG-2-R are not interleaved by an interleaver.

In an implementation, the U-SIG-1, the U-SIG-2, and the U-SIG-2-R are mapped to BPSK constellation points, and the U-SIG-1-R is mapped to a QBPSK constellation point.

In an implementation, the first subfield is in a U-SIG-1 of the U-SIG field.

In an implementation, the first subfield is a bandwidth subfield of the U-SIG field.

For example, in a format 1 and/or a format 2 of the UHT ER PPDU, a bandwidth subfield used to indicate both an RU allocation mode and RU allocation information may be in a U-SIG-1 of the U-SIG field.

In an implementation, the second subfield is in a U-SIG-1 of the U-SIG field.

In an implementation, the second subfield is a bandwidth subfield of the U-SIG field.

In an implementation, the third subfield is in a U-SIG-1 of the U-SIG field.

In an implementation, the third subfield is an RU allocation mode subfield of the U-SIG field.

For example, in a format 1 and/or a format 2 of the UHT ER PPDU, an RU allocation mode subfield used to indicate an RU allocation mode and a bandwidth subfield used to indicate RU allocation information may be in a U-SIG-1 of the U-SIG field.

In an implementation, the fifth subfield is in a U-SIG-2 of the U-SIG field.

In an implementation, the fifth subfield is a UHT-SIG MCS subfield of the U-SIG field.

For example, in a format 1 and/or a format 2 of the UHT ER PPDU, a UHT-SIG MCS subfield used to indicate a modulation and coding scheme of a UHT-SIG field may be in a U-SIG-2 of the U-SIG field.

In an implementation, the fourth subfield is in a user field of a UHT-SIG field.

In an implementation, the fourth subfield is an MCS subfield of the UHT-SIG field.

For example, in a format 1 of the UHT ER PPDU, a U-SIG-1 of the U-SIG field may include a first subfield, for example, a bandwidth subfield, used to indicate an RU allocation mode and RU allocation information. In addition, a U-SIG-2 in the U-SIG field may include a fifth subfield, for example, a UHT-SIG MCS subfield, used to indicate a modulation and coding scheme applied to the UHT-SIG. Moreover, a user field of the UHT-SIG field may include a fourth subfield, for example, an MCS subfield, used to indicate a modulation and coding scheme applied to a data domain of the UHT ER PPDU.

For another example, in a format 1 of the UHT ER PPDU, a U-SIG-1 of the U-SIG field may include: a second subfield, for example, a bandwidth subfield, used to indicate RU allocation information; and a third subfield, for example, an RU allocation mode subfield, used to indicate an RU allocation mode. In addition, a U-SIG-2 in the U-SIG field may include a fifth subfield, for example, a UHT-SIG MCS subfield, used to indicate a modulation and coding scheme applied to the UHT-SIG. Moreover, a user field of the UHT-SIG field may include a fourth subfield, for example, an MCS subfield, used to indicate a modulation and coding scheme applied to a data domain of the UHT ER PPDU.

In an implementation, the fourth subfield is in a U-SIG-2 of the U-SIG field.

In an implementation, the fourth subfield is an MCS subfield of the U-SIG field.

For example, in a format 2 of the UHT ER PPDU, a U-SIG-1 of the U-SIG field may include a first subfield, for example, a bandwidth subfield, used to indicate an RU allocation mode and RU allocation information. In addition, a U-SIG-2 of the U-SIG field may include a fourth subfield, for example, an MCS subfield, used to indicate a modulation and coding scheme applied to a data domain of the UHT ER PPDU.

For another example, in a format 2 of the UHT ER PPDU, a U-SIG-1 of the U-SIG field may include a bandwidth subfield used to indicate RU allocation information, and an RU allocation mode subfield used to indicate an RU allocation mode. In addition, a U-SIG-2 of the U-SIG field may include a fourth subfield, for example, an MCS subfield, used to indicate a modulation and coding scheme applied to a data domain of the UHT ER PPDU.

In an implementation, if the PPDU includes a U-SIG field and a UHT-SIG field, namely, in a case of a format 1, the U-SIG field may further include at least one of the following subfields:

a physical layer version identifier (PHY Version Identifier), uplink (Uplink, UL)/downlink (Downlink, DL), a basic service set BSS color (Color), a transmission opportunity (Transmit Opportunity, TXOP), a PPDU type and compression mode (Type And Compression Mode), punctured channel information (Punctured Channel Information), a number of UHT-SIG symbols (Number Of UHT-SIG Symbols), a cyclic redundancy code (Cyclic Redundancy Check, CRC), a tail (Tail), or reserved.

In an implementation, if the PPDU includes a U-SIG field and a UHT-SIG field, namely, in a case of a format 1, the UHT-SIG field may further include at least one of the following subfields:

spatial reuse (Spatial Reuse), a guard interval and long training field GI+LTF size (Size), a number of ultra-high throughput long training field symbols (Number Of UHT-LTF Symbols), a low-density parity-check code (Low-Density Parity-Codes, LDPC) extra symbol segment (Extra Symbol Segment), a pre-forward error correction Pre-FEC padding factor (Padding Factor), packet extension (PE) disambiguity (Disambiguity), a number of non-orthogonal frequency division multiple access users (Number of Non-OFDMA Users), a station identifier STA-ID, a number of spatial streams (Number of Spatial Streams, NSS), beamformed (Beamformed), coding (Coding), or reserved.

In an implementation, if the PPDU includes a U-SIG field and does not include a UHT-SIG field, namely, in a case of a format 2, the U-SIG field may further include at least one of the following subfields: a physical layer version identifier, UL/DL, a BSS color, a TXOP, spatial reuse, a PPDU type and compression mode, a GI+LTF size, a number of extremely high throughput long training field symbols (Number Of EHT-LTF Symbols), an LDPC extra symbol segment, a Pre-FEC padding factor, PE disambiguity, beamformed, coding, a CRC, or reserved.

In an implementation, the PPDU further includes at least one of the following fields: a non-high throughput short training (L-STF) field, a non-high throughput long training (L-LTF) field, an ultra-high throughput short training (UHT-STF) field, an ultra-high throughput long training (UHT-LTF) field, a non-high throughput signal (L-SIG) field, a data (Data) field, or a packet extension (PE) field.

In this embodiment of the present disclosure, the L-STF field is mainly used for signal detection, automatic gain control, time synchronization, and coarse frequency offset estimation. The L-LTF field is mainly used for channel estimation and further frequency offset estimation. The L-SIG field is used for transmitting rate and length information. The RL-SIG is a replication of the L-SIG. The SIG field is used for carrying information for decoding a PPDU. The UHT-STF field is used for improving automatic gain control estimation in a MIMO transmission. The UHT-LTF is used for MIMO channel estimation from a constellation mapping output to a receive link. The Data field is used for transmitting information. The PE field is an extension of a packet.

In an implementation, a power of at least one of the L-STF field, the L-LTF field, the UHT-STF field, or the UHT-LTF field is increased by a first value, for example, 3 dB. The 3 dB is merely an example but not a limitation, which may be set to another value according to a requirement of a specific application scenario.

In an implementation, the data field uses DCM. The data field may use the DCM to obtain more SNR (Signal to Noise Ratio, signal to noise ratio) gains.

In an implementation, the L-SIG is repeatedly transmitted in time domain.

FIG. 4 is a schematic block diagram of a communications device 400 according to an embodiment of this application. The communications device 400 may include:
a communications unit 410, configured to send and/or receive first information, where the first information is used for an extended range ER.

In an implementation, the first information is a physical layer protocol data unit PPDU.

In an implementation, a resource unit RU allocation mode of the PPDU includes a non-distributed RU allocation mode and/or a distributed RU allocation mode.

In an implementation, in the distributed RU allocation mode, the PPDU is allowed to be transmitted on an RU with 106 tones and/or an MRU with 106 tones + 26 tones.

In an implementation, in the non-distributed RU allocation mode, the PPDU is allowed to be transmitted on at least one of an RU with 106 tones, an MRU with 106 tones + 26 tones, or an RU with 242 tones.

In an implementation, in different RU allocation modes, modulation and coding schemes allowed to be applied to the PPDU are different.

In an implementation, in the distributed RU allocation mode, a modulation and coding scheme allowed to be applied to the PPDU includes at least one of the following:

an MCS 0: BPSK modulation, and a coding rate of 1/2;
an MCS 1: QPSK modulation, and a coding rate of 1/2;
an MCS 2: QPSK modulation, and a coding rate of 3/4; or
an MCS 15: BPSK-DCM modulation, and a coding rate of 1/2.

In an implementation, in the non-distributed RU allocation mode, a modulation and coding scheme includes at least one of the following:

a modulation and coding scheme allowed to be applied to the PPDU to be transmitted on an RU with 106 tones and/or an MRU with 106 tones + 26 tones is at least one of an MCS 0 or an MCS 15; or
a modulation and coding scheme allowed to be applied to the PPDU to be transmitted on an RU with 242 tones is at least one of an MCS 0, an MCS 1, an MCS 2, or an MCS 15.

In an implementation, the PPDU includes a signal SIG field used for carrying information for decoding the PPDU.

In an implementation, the SIG field includes a universal signal U-SIG field.

In an implementation, the U-SIG field includes:
a first subfield used to indicate an RU allocation mode and RU allocation information.

In an implementation, a value of the first subfield indicates at least one of following:

a distributed RU with 106 tones;
a distributed MRU with 106 tones + 26 tones;

a non-distributed RU with 106 tones;
a non-distributed MRU with 106 tones + 26 tones;
a non-distributed RU with 242 tones; or
reserved.

In an implementation, the distributed RU with the 106 tones includes tones obtained by distributed mapping of an RU with 106 tones in upper frequency domain within a 20 MHz bandwidth;

the distributed MRU with the 106 tones + the 26 tones includes tones obtained by distributed mapping of an MRU with 106 tones + 26 tones in upper frequency domain within a 20 MHz bandwidth;
the non-distributed RU with the 106 tones includes an RU with 106 tones in upper frequency domain within a 20 MHz bandwidth; or
the non-distributed MRU with the 106 tones + the 26 tones includes an MRU with 106 tones + 26 tones in upper frequency domain within a 20 MHz bandwidth.

In an implementation, the U-SIG field includes:

a second subfield used to indicate RU allocation information; and
a third subfield used to indicate an RU allocation mode.

In an implementation, a value of the second subfield indicates at least one of following:

an RU with 106 tones;
an MRU with 106 tones + 26 tones;
an RU with 242 tones; or
reserved.

In an implementation, the RU with the 106 tones includes an RU with 106 tones in upper frequency domain within a 20 MHz bandwidth; or
the MRU with the 106 tones + the 26 tones includes an MRU with 106 tones + 26 tones in upper frequency domain within a 20 MHz bandwidth.
In an implementation, a value of the third subfield indicates at least one of following:

a non-distributed RU allocation mode; or
a distributed RU allocation mode.

In an implementation, in a case that the second subfield indicates an RU with 242 tones, the third subfield indicates the non-distributed RU allocation mode.
In an implementation, the SIG field further includes a UHT-SIG field.
In an implementation, the UHT-SIG field includes a fourth subfield used to indicate an MCS applied to a data domain of the PPDU.
In an implementation, a U-SIG field in the SIG field further includes a fifth subfield used to indicate a modulation and coding scheme applied to the ultra-high throughput signal UHT-SIG field.
In an implementation, a value of the fifth subfield indicates at least one of following:

an MCS 15: BPSK-DCM, and a coding rate of 1/2; or
reserved.

In an implementation, the U-SIG field further includes:
a fourth subfield used to indicate an MCS applied to a data domain of the PPDU.
In an implementation, in a case that a value of first subfield indicates a non-distributed RU with 106 tones, a value of the fourth subfield indicates an MCS 0 or an MCS 15; and/or
in a case that a value of the first subfield indicates a non-distributed MRU with 106 tones + 26 tones, a value of the fourth subfield indicates an MCS 0 or an MCS 15.
In an implementation, in a case that a value of a second subfield indicates an RU with 106 tones and a value of a third subfield indicates a non-distributed RU allocation mode, the fourth subfield indicates an MCS 0 or an MCS 15; and/ or
in a case that a value of a second subfield indicates an MRU with 106 tones + 26 tones and a value of a third subfield indicates a non-distributed RU allocation mode, the fourth subfield indicates an MCS 0 or an MCS 15.

In an implementation, a value of the fourth subfield indicates at least one of following:

> an MCS 0: BPSK modulation, and a coding rate of 1/2;
> an MCS 1: QPSK modulation, and a coding rate of 1/2;
> an MCS 2: QPSK modulation, and a coding rate of 3/4;
> an MCS 15: BPSK-DCM modulation, and a coding rate of 1/2; or
> reserved.

In an implementation, an orthogonal frequency division multiplexing OFDM symbol included in the U-SIG field is at least one of a U-SIG-1, a U-SIG-1-R, a U-SIG-2, or a U-SIG-2-R.

In an implementation, the OFDM symbol included in the U-SIG field is encoded by using a binary convolutional code BCC at a coding rate of 1/2.

In an implementation, the U-SIG-1 and the U-SIG-1-R carry same bit information, and the U-SIG-2 and the U-SIG-2-R carry same bit information.

In an implementation, the U-SIG-1 and the U-SIG-2 are interleaved by an interleaver, and the U-SIG-1-R and the U-SIG-2-R are not interleaved by an interleaver.

In an implementation, the U-SIG-1, the U-SIG-2, and the U-SIG-2-R are mapped to BPSK constellation points, and the U-SIG-1-R is mapped to a QBPSK constellation point.

In an implementation, the first subfield is in a U-SIG-1 of the U-SIG field.

In an implementation, the first subfield is a bandwidth subfield of the U-SIG field.

In an implementation, the second subfield is in a U-SIG-1 of the U-SIG field.

In an implementation, the second subfield is a bandwidth subfield of the U-SIG field.

In an implementation, the third subfield is in a U-SIG-1 of the U-SIG field.

In an implementation, the third subfield is an RU allocation mode subfield of the U-SIG field.

In an implementation, the fifth subfield is in a U-SIG-2 of the U-SIG field.

In an implementation, the fifth subfield is a UHT-SIG MCS subfield of the U-SIG field.

In an implementation, the fourth subfield is in a user field of a UHT-SIG field.

In an implementation, the fourth subfield is an MCS subfield of the UHT-SIG field.

In an implementation, the fourth subfield is in a U-SIG-2 of the U-SIG field.

In an implementation, the fourth subfield is an MCS subfield of the U-SIG field.

In an implementation, the U-SIG field further includes at least one of the following subfields: a physical layer version identifier, uplink/downlink UL/DL, a basic service set BSS color, a transmission opportunity TXOP, a PPDU type and compression mode, punctured channel information, a number of UHT-SIG symbols, a cyclic redundancy code CRC, a tail Tail, or reserved.

In an implementation, the UHT-SIG field further includes at least one of the following subfields: spatial reuse, a guard interval and long training field GI+LTF size, a number of ultra-high throughput long training field symbols, a low-density parity-check code LDPC extra symbol segment, a pre-forward error correction Pre-FEC padding factor, packet extension PE disambiguity, a number of non-orthogonal frequency division multiple access users, a station identifier STA-ID, a number of spatial streams NSSs, beamformed, coding, or reserved.

In an implementation, the U-SIG field includes at least one of the following subfields: a physical layer version identifier, UL/DL, a BSS color, a TXOP, spatial reuse, a PPDU type and compression mode, a GI+LTF size, a number of extremely high throughput long training field symbols, an LDPC extra symbol segment, a Pre-FEC padding factor, PE disambiguity, beamformed, coding, a CRC, or reserved.

In an implementation, the PPDU further includes at least one of the following fields: a non-high throughput short training L-STF field, a non-high throughput long training L-LTF field, an ultra-high throughput short training UHT-STF field, an ultra-high throughput long training UHT-LTF field, a non-high throughput signal L-SIG field, a data field, or a packet extension field.

In an implementation, a power of at least one of the L-STF field, the L-LTF field, the UHT-STF field, or the UHT-LTF field is increased by a first value.

In an implementation, dual carrier modulation DCM is applied to the data field.

In an implementation, the L-SIG field is repeatedly transmitted in time domain.

In an implementation, the PPDU is a UHT ER PPDU.

In an implementation, a bandwidth of the PPDU is 20 MHz.

The communications device 400 in this embodiment of this application can implement a corresponding function of the communications device in the foregoing method embodiment. For the procedures, functions, implementations, and beneficial effects corresponding to the modules (submodules, units, components, or the like) in the communications device 400, refer to the corresponding description in the foregoing method embodiment. Details are not described herein again. It should be noted that described functions of modules (submodules, units, components, or the like) in the communications device 400 in this embodiment of this application may be implemented by different modules (submodules, units, components, or the like), or may be implemented by a same module (submodule, unit, component, or the like).

To further balance a data rate and a transmission distance, embodiments of this application may be applied to next-generation Wi-Fi communication such as ultra-high throughput Ultra-High Throughput (UHT) after Wi-Fi 7 specified in IEEE 802.11be. Embodiments of this application provide a PPDU such as a UHT ER PPDU for long-distance transmission (Extended Range) of next-generation Wi-Fi communication.

The UHT ER PPDU is transmitted on a specified RU or MRU, and allows to use a conventional RU mode (a non-distributed RU mode) or a distributed RU mode defined in the IEEE 802.11be. Embodiments of this application include a UHT ER PPDU solution based on a distributed RU.

1. Long-distance transmission principle of the distributed RU

1.1 Distributed RU

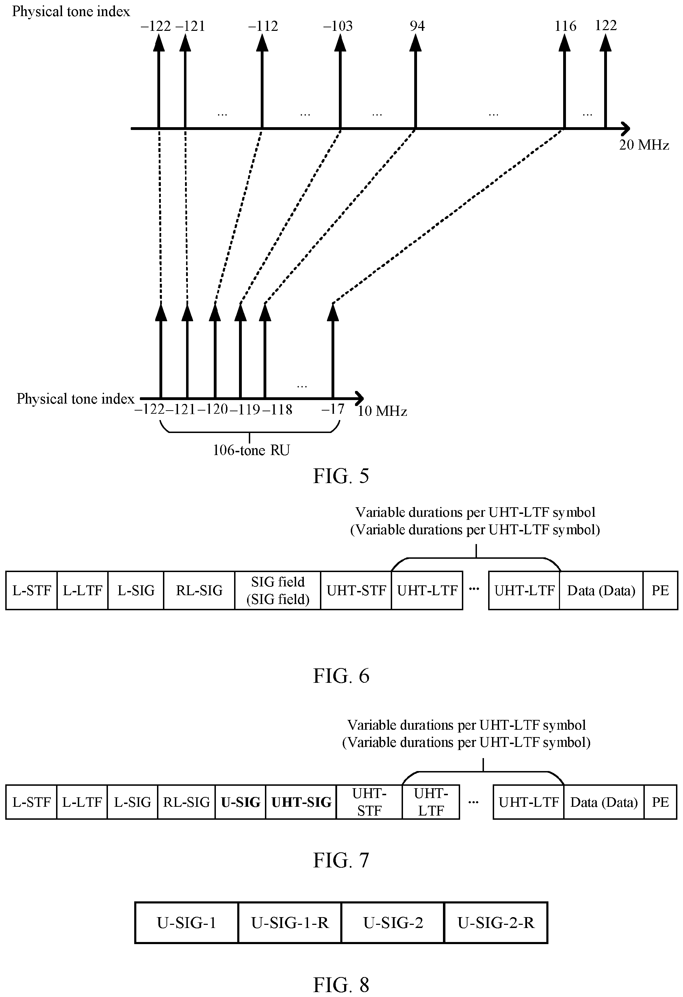

A distributed RU is obtained by mapping continuous tones in a RU to discontinuous tones in a larger bandwidth, as shown in FIG. 5. For example, an RU106 occupies approximately a 10 MHz bandwidth, and continuous tones (for example, physical tone indexes before mapping are from -122 to -17) thereof are mapped to discontinuous tones (for example, physical tone indexes after mapping include -122, -121, ..., -112, ..., -103, ..., 94, ..., 116, and 122) in a larger 20 MHz bandwidth according to a specific mapping rule and a procedure. In this way, tones in the RU106 are distributed in the entire 20 MHz bandwidth.

1.2 Long-distance transmission principle of the distributed RU

Generally, an increase in a transmit power increases the transmission distance and/or the data rate, but also causes an increase in a PSD (Power Spectral Density, power spectral density). Therefore, a PSD and a transmit power of an AP and a STA are limited by a regulation. For example, when a central frequency (for example, a working frequency of the AP or the STA) is 5 GHz, the PSD and the transmit power of the AP and the STA are limited by the regulation as shown in Table 2 below.

Table 2

|  | AP | STA |
|---|---|---|
| PSD (dBm/MHz) | 17 | 11 |
| Limit on the transmit power (dBm) | 30 | 24 |

With reference to Table 2, in a case that the STA uses a non-distributed 106-tone RU (approximately 10 MHz) to transmit UL data, if the transmit power is 24 dBm, the PSD at this time is 24-10*lg(10)=14 dBm/MHz. The PSD exceeds a maximum value 11 dBm/MHz allowed by the regulation. Therefore, the STA cannot work normally in this case. However, in a case that a distributed 106-tone RU is used to transmit UL data, tones of the 106-tone RU are distributed on a 20 MHz bandwidth. The PSD at this time is 24-10*lg(20)=11 dBm/MHz, which satisfies the restriction of the maximum PSD value specified by the regulation. In this case, the STA may work normally.

Similarly, in a case that the STA uses a non-distributed 106+26-tone MRU (approximately 12 MHz) to transmit UL data, if the transmit power is 24 dBm, the PSD at this time is 24-10*lg(12)=13.2 dBm/MHz. The PSD exceeds a maximum value 11 dBm/MHz allowed by the regulation. Therefore, the STA cannot work normally in this case. However, in a case that a distributed 106+26-tone MRU is used, the 106+26-tone MRU is distributed on a 20 MHz bandwidth. The PSD is 24-10*lg(20)=11 dBm/MHz, which satisfies the restriction of the maximum PSD value specified by the regulation. In this case, the STA may work normally.

The case is similar when the AP performs downlink (DL) transmission. Therefore, if the 106-tone RU and the 106+26-tone MRU are used for transmission, under the restrictions for PSD, the distributed RU mode allows larger tranmit power than the non-distributed RU mode.

In embodiments of this application, a path loss (path loss) model for an outdoor UMi NLoS scenario may be used. In the distributed RU mode, transmission distances of the 106-tone RU and the 106+26-tone MRU in different EHT-MCS cases are calculated as shown in Table 3.

Table 3 Data rates and uplink transmission distances of the UHT ER PPDU transmitted on the distributed RU in an outdoor scenario

| EHT-MCS | 106-tone RU | | 106+26-tone MRU | |
|---|---|---|---|---|
| | Maximum data rate (Mb/s) | Transmission distance (m) in the distributed RU mode | Maximum data rate (Mb/s) | Transmission distance (m) in the distributed RU mode |
| MCS 15 (BPSK-DCM, 1/2) | 1.8 | 63.4 | 2.3 | 60.3 |
| MCS 0 **(BPSK,** 1/2) | 3.8 | 63.4 | 4.6 | 60.3 |
| MCS 1 (QPSK, 1/2) | 7.5 | 52.5 | 9.3 | 50 |
| MCS 2 (QPSK, 3/4) | 11.3 | 43.5 | 13.9 | 44 |

In Table 3, if the transmission distance is about 50 m, when the distributed RU mode is used for transmission, the 106-tone RU may use the MCS 1, and the data rate is 7.5 Mb/s. The data rate is 2 times of that in the non-distributed RU mode (as shown in Table 1, where if the transmission distance is about 50 m, when the non-distributed RU mode is used for transmission, the maximum data rate of the 106-tone RU is 3.8 Mb/s). In Table 3, if the transmission distance is about 50 m, when the distributed RU mode is used for transmission, the 106+26-tone MRU may use the MCS 1, and the data rate is 9.3 Mb/s. The data rate is increased to about 2.5 times of that in the non-distributed RU mode (with reference to Table 1).

In addition, it may be learned from Table 3 and Table 1 that, if the 106-tone RU and the 106+26-tone MRU use the MCS 2 (the distributed RU mode), the data rates may be increased to 3 times and 3.7 times respectively, but the transmission distances are reduced by only about 10 m.

Therefore, in embodiments of this application, if the distributed RU mode is used for transmitting the UHT ER PPDU, two types of RU/MRU may be used, namely, an RU106 and an MRU106+26, and the MCS is at least one of an MCS 0, an MCS 1, an MCS 2, or an MCS 15.

2. Structure of the UHT ER PPDU

FIG. 6 is an example of a structural diagram of a UHT ER PPDU. An L-STF field is mainly used for signal detection, automatic gain control, time synchronization, and coarse frequency offset estimation. An L-LTF field is mainly used for channel estimation and further frequency offset estimation. An L-SIG field is used for transmitting rate and length information. An RL-SIG is a replication of the L-SIG. A SIG field is used for carrying information for decoding a PPDU. A UHT-STF field is used for improving automatic gain control estimation in a MIMO transmission. A UHT-LTF is used for MIMO channel estimation from a constellation mapping output to a receive link. A data (Data) field is used for transmitting information. A PE field is an extension of a packet.

In embodiments of this application, one or more of the following may be specified for transmission of the UHT ER PPDU:

Powers of the L-STF and L-LTF fields are increased by 3 dB (for example, after an L-STF sequence is generated, an amplitude of each tone is multiplied by $\sqrt{2}$ ).

Powers of the UHT-STF and UHT-LTF fields are increased by 3 dB.

The Data field may use DCM to obtain more SNR gains.

Signalling (or information) for decoding a PPDU in a SIG field may be indicated by a U-SIG field and a UHT-SIG field, or may be indicated by a U-SIG field alone. Considering signaling overheads and receiver implementation complexity, embodiments of this application provide two formats of the UHT ER PPDU.

Format 1: a U-SIG+UHT-SIG mode; and
Format 2: a U-SIG mode.

Specific descriptions are as follows.

Format 1: the U-SIG+UHT-SIG mode

FIG. 7 shows the format 1 (the U-SIG+UHT-SIG mode) of the UHT ER PPDU. The information for decoding the PPDU is indicated by two subfields: the U-SIG and the UHT-SIG.

(1) U-SIG field

FIG. 8 shows an example of a structure of a U-SIG field. The U-SIG field may include four OFDM symbols: a U-SIG-1, a U-SIG-1-R, a U-SIG-2, and a U-SIG-2-R, all of which are encoded by BCC at a coding rate of 1/2. The U-SIG-1 and the U-SIG-1-R may carry same bit information, and the U-SIG-2 and the U-SIG-2-R may carry same bit information. To obtain more frequency diversity gains, the U-SIG-1 and the U-SIG-2 may be interleaved by an interleaver, and the U-SIG-1-R and the U-SIG-2-R may not be interleaved by an interleaver. In addition, the U-SIG-1, the U-SIG-2, and the U-SIG-2-R are mapped to BPSK constellation points, and the U-SIG-1-R is mapped to a QBPSK constellation point.

Bit information and description of each subfield in the U-SIG field are shown in Example 1 and Example 2 below. A difference between the two examples lies in that: in Example 1, a bandwidth (Bandwidth) subfield is used to indicate an RU allocation mode; and in Example 2, a single bit, i.e., an RU allocation mode (RU allocation mode) subfield, is used to indicate an RU allocation mode.

Example 1:

Table 4 U-SIG field in the format 1 of the UHT ER PPDU

| Two parts of U-SIG (two parts of the U-SIG) | Bit (bit) | Field (field) | Number of bits (number of bits) | Description (description) |
|---|---|---|---|---|
| U-SIG-1 | B0-B2 | PHY Version Identifier | 3 | Differentiating between different PHY protocols 0: EHT 1: UHT 2-7: Validated |
| | B3-B5 | Bandwidth | 3 | Indicating an RU allocation mode and RU allocation information 0: a distributed 106-tone RU 2 (tones obtained by distributed mapping of a 106-tone RU in upper frequency domain within a 20 MHz bandwidth) 1: a distributed 106+26-tone MRU 2 (tones obtained by distributed mapping of a 106+26-tone MRU in upper frequency domain within a 20 MHz bandwidth) 2: a non-distributed 106-tone RU 2 (a 106-tone RU in upper frequency domain within a 20 MHz bandwidth) 3: a non-distributed 106+26-tone MRU 2 (a 106+26-tone MRU in upper frequency domain within a 20 MHz bandwidth) 4: a non-distributed RU242 5-7: Validated |
| | B6 | UL/DL | 1 | Indicating whether the PPDU is transmitted in uplink or downlink |
| | B7-B12 | BSS Color | 6 | An identifier of a BSS |
| | B13-B19 | TXOP | 7 | A duration of a TXOP |
| | B20-B25 | Disregard | 6 | All bits are set to 1 to indicate disregard |

(continued)

| Two parts of U-SIG (two parts of the U-SIG) | Bit (bit) | Field (field) | Number of bits (number of bits) | Description (description) |
|---|---|---|---|---|
| U-SIG-2 | B0-B1 | PPDU Type And Compression Mode | 2 | Indicating being TB PPDU or not |
| | B2 | Validate | 1 | Indicating Validate if all bits are set to 1 |
| | B3-B7 | Punctured Channel Information | 5 | Indicating punctured channel information all bits are set to 1 |
| | B8 | Validate | 1 | Indicating Validate if all bits are set to 1 |
| | B9-B10 | UHT-SIG MCS | 2 | Indicating a modulation and coding scheme applied to the UHT-SIG 0: an MCS 15 (BPSK-DCM, and a coding rate of 1/2) 1-3: Validated |
| | B11-B15 | Number Of UHT-SIG Symbols | 5 | Indicatinga number of UHT-SIG symbols 0: one UHT-SIG symbol 1-3: Validated |
| | B16-B19 | CRC | 4 | Cyclic redundancy code |
| | B20-B25 | Tail | 6 | Used to terminate convolutional decoding, and all bits are set to 0 |

**Example 2:**

**Table 5 U-SIG field in the format 1 of the UHT ER PPDU**

| Two parts of U-SIG | Bit | Field | Number of bits | Description |
|---|---|---|---|---|
| U-SIG-1 | B0-B2 | PHY Version Identifier | 3 | Differentiating between different PHY protocols<br><br>0: EHT<br>1: UHT<br>2-7: Validated |
| | B3-B5 | Bandwidth | 3 | Indicating RU allocation information<br>0: a 106-tone RU 2 (a 106-tone RU in upper frequency domain within a 20 MHz bandwidth)<br>1: a 106+26-tone MRU 2 (a 106+26-tone MRU in upper frequency domain within a 20 MHz bandwidth)<br>2: an RU242<br>3-7: Validated |
| | B6 | UL/DL | 1 | Indicating whether the PPDU is transmitted in uplink or downlink |
| | B7-B 12 | BSS Color | 6 | An identifier of a BSS |
| | B13-B19 | TXOP | 7 | A duration of a TXOP |
| | B20 | RU allocation mode | 1 | Indicating an RU allocation mode<br>0: a non-distributed RU allocation mode<br>1: a distributed RU allocation mode<br>Note: When a value of Bandwidth is 2 (indicating an RU242), a value of RU allocation mode can only be 0 (indicating a non-distributed RU allocation mode), and a value 1 of RU allocation mode indicates Validated. |
| | B21-B25 | Disregard | 5 | All bits are set to 1 to indicate disregard |
| U-SIG-2 | B0-B1 | PPDU Type And Compression Mode | 2 | Indicates being TB PPDU or not |
| | B2 | Validate | 1 | Indicating Validate if all bits are set to 1 |
| | B3-B7 | Punctured Channel Information | 5 | Indicating punctured channel information all bits are set to 1 |
| | B8 | Validate | 1 | Indicating Validate if all bits are set to 1 |
| | B9-B10 | UHT-SIG MCS | 2 | Indicating a modulation and coding scheme applied to the UHT-SIG<br>0: an MCS 15 (BPSK-DCM, and a coding rate of 1/2)<br>1-3: Validated |
| | B11-B15 | Number Of UHT-SIG Symbols | 5 | Indicating a number of UHT-SIG symbols<br>0: one UHT-SIG symbol<br>1-3: Validated |
| | B16-B19 | CRC | 4 | Cyclic redundancy code |
| | B20-B25 | Tail | 6 | Used to terminate convolutional decoding, and all bits are set to 0 |

(2) UHT-SIG field

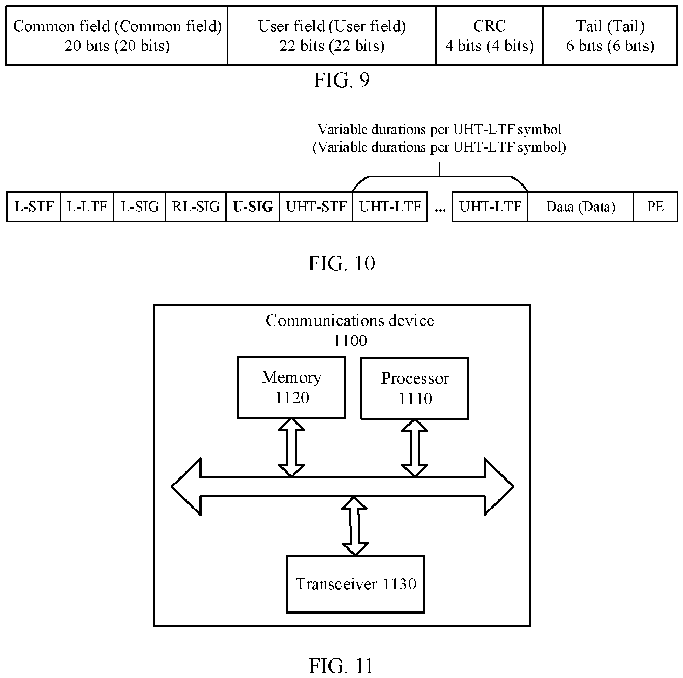

The UHT-SIG field mainly includes a common field (common field) and a user field (user field). FIG. 9 shows a structure of the UHT-SIG field. To achieve a same gain as a replication structure in the U-SIG, in embodiments of this application, BPSK-DCM modulation and a coding rate of 1/2, such as an MCS 15 defined in an IEEE 802.11 be Draft 1.5, may be mandatorily applied to the UHT-SIG . Bit information and description of each subfield in the UHT-SIG field are shown in Example 3 and Example 4.

**Example 3: (which may be combined with Example 1)**

**Table 6 UHT-SIG field in the format 1 of the UHT ER PPDU**

| | Bit | Subfield | Number of bits | Description |
|---|---|---|---|---|
| Common field | B0-B3 | Spatial Reuse | 4 | Indicating whether a spatial reuse mode is used |
| | B4-B5 | GI+LTF Size | 2 | Indicating a GI duration and a UHT-LTF type |
| | B6-B8 | Number Of UHT-LTF Symbols | 3 | Indicating a number of UHT-LTF symbols |
| | B9 | LDPC Extra Symbol Segment | 1 | Indicating whether there is an LDPC extra symbol segment |
| | B10-B11 | Pre-FEC Padding Factor | 2 | Indicating a pre-FEC padding factor |
| | B12 | PE Disambiguity | 1 | Indicating PE disambiguity |
| | B13-B16 | Disregard | 4 | Indicating Disregard if all bits are set to 1 |
| | B17-B19 | Number of Non-OFDMA Users | 3 | Indicating a number of non-OFDMA users all bits are set to 1 |
| User field | B0-B10 | STA-ID | 11 | Indicating an ID of a STA |
| | B11-B14 | MCS | 4 | Indicating an MCS applied to a data domain of the UHT ER PPDU<br>0: an MCS 0 (BPSK, and a coding rate of 1/2)<br>1: an MCS 1 (QPSK, and a coding rate of 1/2)<br>2: an MCS 2 (QPSK, and a coding rate of 3/4)<br>3: an MCS 15 (BPSK-DCM, and a coding rate of 1/2) 4-15: Validated<br><br>Note: When a value of Bandwidth is 2 or 3 (indicating a non-distributed RU106 or a non-distributed MRU106+26), only an MCS 0 or an MCS 15 can be applied, and values 1 and 2 of the MCS field indicate Validated. |

(continued)

|  | Bit | Subfield | Number of bits | Description |
|---|---|---|---|---|
|  | B15 | Reserved | 1 | All bits are set to 1 to indicate reserved |
|  | B16-B19 | NSS | 4 | Indicating a number of spatial streams<br>0: one spatial stream<br>1-15: Validated |
|  | B20 | Beamformed | 1 | Indicating whether transmission beamforming is used |
|  | B21 | Coding | 1 | Indicating a coding mode |

**Example 4: (which may be combined with Example 2)**

**Table 7 UHT-SIG field in the format 1 of the UHT ER PPDU**

|  | Bit | Subfield | Number of bits | Description |
|---|---|---|---|---|
| Common field | B0-B3 | Spatial Reuse | 4 | Indicating whether a spatial reuse mode is used |
|  | B4-B5 | GI+LTF Size | 2 | Indicating a GI duration and a UHT-LTF type |
|  | B6-B8 | Number Of UHT-LTF Symbols | 3 | Indicating a number of UHT-LTF symbols |
|  | B9 | LDPC Extra Symbol Segment | 1 | Indicating whether there is an LDPC extra symbol segment |
|  | B10-B11 | Pre-FEC Padding Factor | 2 | Indicating a pre-FEC padding factor |
|  | B12 | PE Disambiguity | 1 | Indicating PE disambiguity |
|  | B13-B16 | Disregard | 4 | Indicating Disregard if all bits are set to 1 |
|  | B17-B19 | Number of Non-OFDMA Users | 3 | Indicating a number of non-OFDMA users all bits ar set to 1 |

(continued)

| | Bit | Subfield | Number of bits | Description |
|---|---|---|---|---|
| User field | B0-B10 | STA-ID | 11 | Indicating an ID of a STA |
| | B11-B14 | MCS | 4 | Indicating an MCS applied to a data domain of the UHT ER PPDU<br>0: an MCS 0 (BPSK, and a coding rate of 1/2)<br>1: an MCS 1 (QPSK, and a coding rate of 1/2)<br>2: an MCS 2 (QPSK, and a coding rate of 3/4)<br>3: an MCS 15 (BPSK-DCM, and a coding rate of 1/2)<br>4-15: Validated<br>Note: When a value of Bandwidth is 0 or 1, and a value of RU allocation mode is 0 (indicating a non-distributed RU106 or a non-distributed MRU106+26), only an MCS 0 or an MCS 15 can be applied, and values 1 and 2 of the MCS field indicate Validated. |
| | B15 | Reserved | 1 | All bits are set to 1 to indicate reserved |
| | B16-B19 | NSS | 4 | Indicating a number of spatial streams<br>0: one spatial stream<br>1-15: Validated |
| | B20 | Beamformed | 1 | Indicating whether transmission beamforming is used |
| | B21 | Coding | 1 | Indicating a coding mode |

**Format 2: the U-SIG mode**

FIG. 10 shows the format 2 (the U-SIG mode) of the UHT ER PPDU. The information for decoding the PPDU is indicated by the U-SIG field. Table 4 shows subfields in the U-SIG field. FIG. 8 is a structural diagram of the U-SIG field. The U-SIG field includes four OFDM symbols: a U-SIG-1, a U-SIG-1-R, a U-SIG-2, and a U-SIG-2-R, all of which are encoded by BCC at a coding rate of 1/2. The U-SIG-1 and the U-SIG-1-R carry same bit information, and the U-SIG-2 and the U-SIG-2-R carry same bit information. To obtain more frequency diversity gains, the U-SIG-1 and the U-SIG-2 are interleaved by an interleaver, and the U-SIG-1-R and the U-SIG-2-R are not interleaved by an interleaver. In addition, the U-SIG-1, the U-SIG-2, and the U-SIG-2-R are mapped to BPSK constellation points, and the U-SIG-1-R is mapped to a QBPSK constellation point.

Bit information and description of each subfield in the U-SIG field are shown in Example 5 and Example 6. A difference between the two examples lies in that: in Example 5, a Bandwidth field is used to indicate an RU allocation mode; and in Example 6, a single bit RU allocation mode is used to indicate an RU allocation mode.

**Example 5:**

**Table 8 U-SIG field in the format 2 of the UHT ER PPDU**

| Two parts of U-SIG | Bit | Field | Number of bits | Description |
|---|---|---|---|---|
| U-SIG-1 | B0-B2 | PHY Version Identifier | 3 | Differentiating between different PHY protocols<br><br>0: EHT<br>1: UHT<br>2-7: Validated |
| | B3-B5 | Bandwidth | 3 | Indicating an RU allocation mode and RU |
| | | | | allocation information<br>0: a distributed 106-tone RU 2 (tones obtained by distributed mapping of a 106-tone RU in upper frequency domain within a 20 MHz bandwidth)<br>1: a distributed 106+26-tone MRU 2 (tones obtained by distributed mapping of a 106+26-tone MRU in upper frequency domain within a 20 MHz bandwidth)<br>2: a non-distributed 106-tone RU 2 (a 106-tone RU in upper frequency domain within a 20 MHz bandwidth)<br>3: a non-distributed 106+26-tone MRU 2 (a 106+26-tone MRU in upper frequency domain within a 20 MHz bandwidth)<br>4: a non-distributed RU242<br>5-7: Validated |
| | B6 | UL/DL | 1 | Indicating whether the PPDU is transmitted in uplink or downlink |
| | B7-B 12 | BSS Color | 6 | An identifier of a BSS |
| | B13-B19 | TXOP | 7 | Indicating a duration of a TXOP |
| | B20-B23 | Spatial Reuse | 4 | Indicating whether a spatial reuse mode is used |
| | B24-B25 | Disregard | 2 | All bits are set to 1 to indicate disregard |
| U-SIG-2 | B0-B1 | PPDU Type And Compression Mode | 2 | Indicating a type of the PPDU |
| | B2 | GI+LTF Size | 1 | Indicating a GI duration and a UHT-LTF type |
| | B3-B5 | Number Of EHT-LTF | 3 | Indicating a number of UHT-LTF symbols |

(continued)

| Two parts of U-SIG | Bit | Field | Number of bits | Description |
|---|---|---|---|---|
| | | Symbols | | |
| | B6 | LDPC Extra Symbol Segment | 1 | Indicating whether there is an LDPC extra symbol segment |
| | B7-B8 | Pre-FEC Padding Factor | 2 | Indicating a pre-FEC padding factor |
| | B9 | PE Disambiguity | 1 | Indicating PE disambiguity |
| | B10-B12 | MCS | 3 | Indicating an MCS applied to a data domain of the UHT ER PPDU<br>0: an MCS 0 (BPSK, and a coding rate of 1/2)<br>1: an MCS 1 (QPSK, and a coding rate of 1/2)<br>2: an MCS 2 (QPSK, and a coding rate of 3/4)<br>3: an MCS 15 (BPSK-DCM, and a coding rate of 1/2)<br>4-7: Validated<br>Note: When a value of Bandwidth is 2 or 3 (indicating a non-distributed RU106 or a non-distributed MRU106+26), only an MCS 0 or an MCS 15 can be applied, and values 1 and 2 of the MCS field indicate Validated. |
| | B13 | Beamformed | 1 | Indicating transmission beamforming |
| | B14 | Coding | 1 | Indicating a coding scheme |
| | B15 | Disregard | 1 | All bits are set to 1 to indicate disregard |
| | B16-B19 | CRC | 4 | Cyclic redundancy code |
| | B20-B25 | Tail | 6 | Used to terminate convolutional decoding, and all bits are set to 0 |

**Example 6:**

**Table 9 U-SIG field in the format 2 of the UHT ER PPDU**

| Two parts of U-SIG | Bit | Field | Number of bits | Description |
|---|---|---|---|---|
| U-SIG-1 | B0-B2 | PHY Version Identifier | 3 | Differentiating between different PHY protocols<br>0: EHT<br>1: UHT<br>2-7: Validated |
| | B3-B5 | Bandwidth | 3 | Indicating RU allocation information<br>0: a 106-tone RU 2 (a 106-tone RU in upper frequency domain within a 20 MHz bandwidth)<br>1: a 106+26-tone MRU 2 (a 106+26-tone MRU in upper frequency domain within a 20 MHz bandwidth)<br>2: an RU242<br>3-7: Validated |
| | B6 | UL/DL | 1 | Indicating whether the PPDU is transmitted in uplink or downlink |
| | B7-B 12 | BSS Color | 6 | An identifier of a BSS |
| | B13-B19 | TXOP | 7 | Indicating a duration of a TXOP |
| | B20-B23 | Spatial Reuse | 4 | Indicating whether a spatial reuse mode is used |
| | B24 | RU allocation mode | 1 | Indicating an RU allocation mode<br>0: a non-distributed RU allocation mode<br>1: a distributed RU allocation mode<br>Note: When a value of Bandwidth is 2 (indicating an RU242), a value of RU allocation mode can only be 0 (indicating a non-distributed RU allocation mode), and a value 1 of RU allocation mode indicates Validated. |
| | B25 | Disregard | 1 | All bits are set to 1 to indicate disregard |

(continued)

| Two parts of U-SIG | Bit | Field | Number of bits | Description |
|---|---|---|---|---|
| U-SIG-2 | B0-B1 | PPDU Type And Compression Mode | 2 | Indicating a type of the PPDU |
| | B2 | GI+LTF Size | 1 | Indicating a GI duration and a UHT-LTF type |
| | B3-B5 | Number Of EHT-LTF Symbols | 3 | Indicating a number of UHT-LTF symbols |
| | B6 | LDPC Extra Symbol Segment | 1 | Indicating whether there is an LDPC extra symbol segment |
| | B7-B8 | Pre-FEC Padding Factor | 2 | Indicating a pre-FEC padding factor |
| | B9 | PE Disambiguity | 1 | Indicating PE disambiguity |
| | B10-B12 | MCS | 3 | Indicating an MCS applied to a data domain of the UHT ER PPDU<br>0: an MCS 0 (BPSK, and a coding rate of 1/2)<br>1: an MCS 1 (QPSK, and a coding rate of 1/2)<br>2: an MCS 2 (QPSK, and a coding rate of 3/4)<br>3: an MCS 15 (BPSK-DCM, and a coding rate of 1/2)<br>4-7: Validated<br>Note: When a value of Bandwidth is 0 or 1, and a value of RU allocation mode is 0 (indicating a non-distributed RU106 or a non-distributed MRU106+26), only an MCS 0 or an MCS 15 can be applied, and values 1 and 2 of the MCS field indicate Validated. |
| | B13 | Beamformed | 1 | Indicating transmission beamforming |
| | B14 | Coding | 1 | Indicating a coding scheme |
| | B15 | Disregard | 1 | All bits are set to 1 to indicate disregard |
| | B16-B19 | CRC | 4 | Cyclic redundancy code |
| | B20-B25 | Tail | 6 | Used to terminate convolutional decoding, and all bits are set to 0 |

It can be learned from the foregoing two formats that, with the format 1 (the U-SIG+UHT-SIG mode), a receive program of a receiver does not need to be modified, which reduces implementation complexity of the receiver, but increases signalling overheads. With the format 2 (the U-SIG mode), the receive program of the receiver needs to be modified, but signalling overheads is reduced.

In the UHT ER PPDU based on the distributed RU in embodiments of this application, the transmission distance is further extended compared with the HE ER SU PPDU. In addition, under a similar transmission distance, the data rate may be increased to 2 to 2.5 times.

In the U-SIG+UHT-SIG format provided in embodiments of this application, the UHT-SIG uses the modulation and coding scheme of "BPSK-DCM+a coding rate of 1/2", so that the UHT-SIG field can obtain more SNR gains, to achieve performance similar to that of the U-SIG field.

In addition, the structure of the UHT-SIG field may also be duplicated in time domain, that is, the UHT-SIG field is followed by a replication UHT-SIG-R of the UHT-SIG field.

FIG. 11 is a schematic structural diagram of a communications device 1100 according to an embodiment of this application. The communications device 1100 includes a processor 1110, and the processor 1110 may invoke a computer program from a memory and run the computer program to cause the communications device 1100 to implement a method in embodiments of this application.

In an implementation, the communications device 1100 may further include a memory 1120. The processor 1110 may invoke a computer program from the memory 1120 and run the computer program to cause the communications device 1100 to implement a method in embodiments of this application.

The memory 1120 may be a separate component independent of the processor 1110, or may be integrated into the processor 1110.

In an implementation, the communications device 1100 may further include a transceiver 1130. The processor 1110 may control the transceiver 1130 to communicate with another device, and specifically, may send information or data to the another device, or receive information or data sent by the another device.

The transceiver 1130 may include a transmitter and a receiver. The transceiver 1130 may further include an antenna, and there may be one or more antennas.

In an implementation, the communications device 1100 may be the communications device in embodiments of this application, and the communications device 1100 may implement corresponding processes implemented by the communications device in methods in embodiments of this application. For brevity, details are not described herein again.

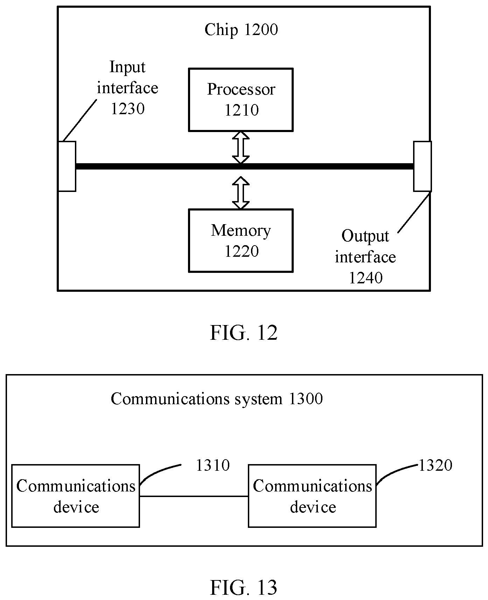

FIG. 12 is a schematic structural diagram of a chip 1200 according to an embodiment of this application. The chip 1200 includes a processor 1210, and the processor 1210 may invoke a computer program from a memory and run the computer program to implement a method in embodiments of this application.

In an implementation, the chip 1200 may further include a memory 1220. The processor 1210 may invoke a computer program from the memory 1220 and run the computer program, so as to implement a method executed by the terminal device or the network device in embodiments of this application.

The memory 1220 may be a separate component independent of the processor 1210, or may be integrated into the processor 1210.

In an implementation, the chip 1200 may further include an input interface 1230. The processor 1210 may control the input interface 1230 to communicate with another device or chip, and specifically, may obtain information or data sent by the another device or chip.

In an implementation, the chip 1200 may further include an output interface 1240. The processor 1210 may control the output interface 1240 to communicate with another device or chip, and specifically, may output information or data to the another device or chip.

In an implementation, the chip may be applied to the communications device in embodiments of this application, and the chip may implement corresponding processes implemented by the communications device in methods in embodiments of this application. For brevity, details are not described herein again.

It should be understood that the chip mentioned in embodiments of this application may also be referred to as a system-level chip, a system chip, a chip system, a system-on-chip, or the like.

The processor mentioned above may be a general-purpose processor, a digital signal processor (digital signal processor, DSP), a field programmable gate array (field programmable gate array, FPGA), an application specific integrated circuit (application specific integrated circuit, ASIC), or another programmable logic device, a transistor logic device, a discrete hardware component, or the like. The general-purpose processor mentioned above may be a microprocessor, or may be any conventional processor or the like.

The memory mentioned above may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be noted that the foregoing memory is an example and non-limiting description. For example, the memory in embodiments of this application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory in embodiments of this application is intended to include but not be limited to these and any other suitable types of memories.

FIG. 13 is a schematic block diagram of a communications system 1300 according to an embodiment of this application. The communications system 1300 includes a communications device 1310 and a communications device 1320.

The communications device 1310 is configured to send first information to the communications device 1320, or receive first information sent by the communications device 1320, where the first information is used for an extended range ER.

The communications device 1320 is configured to receive the first information sent by the communications device 1310, or send the first information to the communications device 1310.

The communications device 1310 and the communications device 1320 may be configured to implement corresponding functions implemented by the communications device in the foregoing methods. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (Digital Subscriber Line, DSL)) manner or a wireless (such as infrared, wireless, and microwave) manner. The computer-readable storage medium may be any available medium accessible by a computer or a data storage device such as a server or a data center that integrates one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of and the claims.

**Claims**

1. A communication method, comprising:
sending and/or receiving, by a communications device, first information, wherein the first information is used for an extended range ER.

2. The method according to claim 1, wherein the first information is a physical layer protocol data unit PPDU.

3. The method according to claim 2, wherein a resource unit RU allocation mode of the PPDU comprises a non-distributed RU allocation mode and/or a distributed RU allocation mode.

4. The method according to claim 3, wherein in the distributed RU allocation mode, the PPDU is allowed to be transmitted on an RU with 106 tones and/or an MRU with 106 tones + 26 tones.

5. The method according to claim 3, wherein in the non-distributed RU allocation mode, the PPDU is allowed to be transmitted on at least one of an RU with 106 tones, an MRU with 106 tones + 26 tones, or an RU with 242 tones.

6. The method according to claim 4 or 5, wherein in different RU allocation modes, modulation and coding schemes allowed to be applied to the PPDU are different.

7. The method according to any one of claims 3 to 6, wherein in the distributed RU allocation mode, a modulation and coding scheme MCS allowed to be applied to the PPDU comprises at least one of the following:

EP 4 535 889 A1

an MCS 0: BPSK modulation, and a coding rate of 1/2;
an MCS 1: QPSK modulation, and a coding rate of 1/2;
an MCS 2: QPSK modulation, and a coding rate of 3/4; or
an MCS 15: BPSK-DCM modulation, and a coding rate of 1/2.

8. The method according to any one of claims 3 to 6, wherein in the non-distributed RU allocation mode, a modulation and coding scheme comprises at least one of the following:

a modulation and coding scheme allowed to be applied to the PPDU to be transmitted on an RU with 106 tones and/or an MRU with 106 tones + 26 tones is at least one of an MCS 0 or an MCS 15; or
a modulation and coding scheme allowed to be applied to the PPDU to be transmitted on an RU with 242 tones is at least one of an MCS 0, an MCS 1, an MCS 2, or an MCS 15.

9. The method according to any one of claims 2 to 8, wherein the PPDU comprises a signal SIG field used for carrying information for decoding the PPDU.

10. The method according to claim 9, wherein the SIG field comprises a universal signal U-SIG field.

11. The method according to claim 10, wherein the U-SIG field comprises:
a first subfield used to indicate an RU allocation mode and RU allocation information.

12. The method according to claim 11, wherein a value of the first subfield indicates at least one of following:

a distributed RU with 106 tones;
a distributed MRU with 106 tones + 26 tones;
a non-distributed RU with 106 tones;
a non-distributed MRU with 106 tones + 26 tones;
a non-distributed RU with 242 tones; or
reserved.

13. The method according to claim 12, wherein the distributed RU with the 106 tones comprises tones obtained by distributed mapping of an RU with 106 tones in upper frequency domain within a 20 MHz bandwidth;

the distributed MRU with the 106 tones + the 26 tones comprises tones obtained by distributed mapping of an MRU with 106 tones + 26 tones in upper frequency domain within a 20 MHz bandwidth;
the non-distributed RU with the 106 tones comprises an RU with 106 tones in upper frequency domain within a 20 MHz bandwidth; or
the non-distributed MRU with the 106 tones + the 26 tones comprises an MRU with 106 tones + 26 tones in upper frequency domain within a 20 MHz bandwidth.

14. The method according to claim 10, wherein the U-SIG field comprises:

a second subfield used to indicate RU allocation information; and
a third subfield used to indicate an RU allocation mode.

15. The method according to claim 14, wherein a value of the second subfield indicates at least one of following:

an RU with 106 tones;
an MRU with 106 tones + 26 tones;
an RU with 242 tones; or
reserved.

16. The method according to claim 15, wherein

the RU with the 106 tones comprises an RU with 106 tones in upper frequency domain within a 20 MHz bandwidth; or
the MRU with the 106 tones + the 26 tones comprises an MRU with 106 tones + 26 tones in upper frequency domain within a 20 MHz bandwidth.

17. The method according to any one of claims 14 to 16, wherein a value of the third subfield indicates at least one of following:

   a non-distributed RU allocation mode; or
   a distributed RU allocation mode.

18. The method according to claim 17, wherein in a case that the second subfield indicates an RU with 242 tones, the third subfield indicates the non-distributed RU allocation mode.

19. The method according to any one of claims 10 to 18, wherein the SIG field further comprises a UHT-SIG field.

20. The method according to claim 19, wherein the UHT-SIG field comprises a fourth subfield used to indicate an MCS applied to a data domain of the PPDU.

21. The method according to claim 19 or 20, wherein the U-SIG field in the SIG field further comprises a fifth subfield used to indicate a modulation and coding scheme applied to the ultra-high throughput signal UHT-SIG field.

22. The method according to claim 21, wherein a value of the fifth subfield indicates at least one of following:

   an MCS 15: BPSK-DCM, and a coding rate of 1/2; or
   reserved.

23. The method according to any one of claims 11 to 18, wherein the U-SIG field further comprises:
   a fourth subfield used to indicate an MCS applied to a data domain of the PPDU.

24. The method according to claim 23, wherein in a case that a value of the first subfield indicates a non-distributed RU with 106 tones, a value of the fourth subfield indicates an MCS 0 or an MCS 15; and/or
   in a case that a value of the first subfield indicates a non-distributed MRU with 106 tones + 26 tones, a value of the fourth subfield indicates an MCS 0 or an MCS 15.

25. The method according to claim 23, wherein in a case that a value of a second subfield indicates an RU with 106 tones and a value of a third subfield indicates a non-distributed RU allocation mode, the fourth subfield indicates an MCS 0 or an MCS 15; and/or
   in a case that a value of a second subfield indicates an MRU with 106 tones + 26 tones and a value of a third subfield indicates a non-distributed RU allocation mode, the fourth subfield indicates an MCS 0 or an MCS 15.

26. The method according to any one of claims 23 to 25, wherein a value of the fourth subfield indicates at least one of following:

   an MCS 0: BPSK modulation, and a coding rate of 1/2;
   an MCS 1: QPSK modulation, and a coding rate of 1/2;
   an MCS 2: QPSK modulation, and a coding rate of 3/4;
   an MCS 15: BPSK-DCM modulation, and a coding rate of 1/2; or
   reserved.

27. The method according to any one of claims 10 to 26, wherein an orthogonal frequency division multiplexing OFDM symbol comprised in the U-SIG field is at least one of a U-SIG-1, a U-SIG-1-R, a U-SIG-2, or a U-SIG-2-R.

28. The method according to claim 27, wherein the OFDM symbol comprised in the U-SIG field is encoded by using a binary convolutional code BCC at a coding rate of 1/2.

29. The method according to claim 27 or 28, wherein the U-SIG-1 and the U-SIG-1-R carry same bit information, and the U-SIG-2 and the U-SIG-2-R carry same bit information.

30. The method according to any one of claims 27 to 29, wherein the U-SIG-1 and the U-SIG-2 are interleaved by an interleaver, and the U-SIG-1-R and the U-SIG-2-R are not interleaved by an interleaver.

31. The method according to any one of claims 27 to 30, wherein the U-SIG-1, the U-SIG-2, and the U-SIG-2-R are mapped to BPSK constellation points, and the U-SIG-1-R is mapped to a QBPSK constellation point.

32. The method according to claim 11, 12, 13, or 24, wherein the first subfield is in a U-SIG-1 of the U-SIG field.

33. The method according to claim 32, wherein the first subfield is a bandwidth subfield of the U-SIG field.

34. The method according to any one of claims 14 to 18 or claim 25, wherein the second subfield is in a U-SIG-1 of the U-SIG field.

35. The method according to claim 34, wherein the second subfield is a bandwidth subfield of the U-SIG field.

36. The method according to any one of claims 14 to 18 or claim 25, wherein the third subfield is in a U-SIG-1 of the U-SIG field.

37. The method according to claim 36, wherein the third subfield is an RU allocation mode subfield of the U-SIG field.

38. The method according to claim 21 or 22, wherein the fifth subfield is in a U-SIG-2 of the U-SIG field.

39. The method according to claim 38, wherein the fifth subfield is a UHT-SIG MCS subfield of the U-SIG field.

40. The method according to any one of claims 20 and 23 to 26, wherein the fourth subfield is in a user field of a UHT-SIG field.

41. The method according to claim 40, wherein the fourth subfield is an MCS subfield of the UHT-SIG field.

42. The method according to any one of claims 20 and 23 to 26, wherein the fourth subfield is in a U-SIG-2 of the U-SIG field.

43. The method according to claim 42, wherein the fourth subfield is an MCS subfield of the U-SIG field.

44. The method according to any one of claims 10 to 22, wherein the U-SIG field further comprises at least one of the following subfields:
a physical layer version identifier, uplink/downlink UL/DL, a basic service set BSS color, a transmission opportunity TXOP, a PPDU type and compression mode, punctured channel information, a number of UHT-SIG symbols, a cyclic redundancy code CRC, a tail Tail, or reserved.

45. The method according to any one of claims 19 to 22, wherein the UHT-SIG field further comprises at least one of the following subfields:
spatial reuse, a guard interval and long training field GI+LTF size, a number of ultra-high throughput long training field symbols, a low-density parity-check code LDPC extra symbol segment, a pre-forward error correction Pre-FEC padding factor, packet extension PE disambiguity, a number of non-orthogonal frequency division multiple access users, a station identifier STA-ID, a number of spatial streams NSSs, beamformed, coding, or reserved.

46. The method according to any one of claims 10 to 18 or any one of claims 23 to 26, wherein the U-SIG field comprises at least one of the following subfields:
a physical layer version identifier, UL/DL, a BSS color, a TXOP, spatial reuse, a PPDU type and compression mode, a GI+LTF size, a number of extremely high throughput long training field symbols, an LDPC extra symbol segment, a Pre-FEC padding factor, PE disambiguity, beamformed, coding, a CRC, or reserved.

47. The method according to any one of claims 2 to 46, wherein the PPDU further comprises at least one of the following fields: a non-high throughput short training L-STF field, a non-high throughput long training L-LTF field, an ultra-high throughput short training UHT-STF field, an ultra-high throughput long training UHT-LTF field, a non-high throughput signal L-SIG field, a data field, or a packet extension field.

48. The method according to claim 47, wherein a power of at least one of the L-STF field, the L-LTF field, the UHT-STF field, or the UHT-LTF field is increased by a first value.

49. The method according to claim 47 or 48, wherein dual carrier modulation DCM is applied to the data field.

50. The method according to any one of claims 47 to 49, wherein the L-SIG field is repeatedly transmitted in time domain.

51. The method according to any one of claims 2 to 50, wherein the PPDU is a UHT ER PPDU.

52. The method according to any one of claims 2 to 51, wherein a bandwidth of the PPDU is 20 MHz.

53. A communications device, comprising:
a communications unit, configured to send and/or receive first information, wherein the first information is used for an extended range ER.

54. The device according to claim 53, wherein the first information is a physical layer protocol data unit PPDU.

55. The device according to claim 54, wherein a resource unit RU allocation mode of the PPDU comprises a non-distributed RU allocation mode and/or a distributed RU allocation mode.

56. The device according to claim 55, wherein in the distributed RU allocation mode, the PPDU is allowed to be transmitted on an RU with 106 tones and/or an MRU with 106 tones + 26 tones.

57. The device according to claim 55, wherein in the non-distributed RU allocation mode, the PPDU is allowed to be transmitted on at least one of an RU with 106 tones, an MRU with 106 tones + 26 tones, or an RU with 242 tones.

58. The device according to claim 56 or 57, wherein in different RU allocation modes, modulation and coding schemes allowed to be applied to the PPDU are different.

59. The device according to any one of claims 55 to 58, wherein in the distributed RU allocation mode, a modulation and coding scheme allowed to be applied to the PPDU comprises at least one of the following:

    an MCS 0: BPSK modulation, and a coding rate of 1/2;
    an MCS 1: QPSK modulation, and a coding rate of 1/2;
    an MCS 2: QPSK modulation, and a coding rate of 3/4; or
    an MCS 15: BPSK-DCM modulation, and a coding rate of 1/2.

60. The device according to any one of claims 55 to 58, wherein in the non-distributed RU allocation mode, a modulation and coding scheme comprises at least one of the following:

    a modulation and coding scheme allowed to be applied to the PPDU to be transmitted on an RU with 106 tones and/or an MRU with 106 tones + 26 tones is at least one of an MCS 0 or an MCS 15; or
    a modulation and coding scheme allowed to be applied to the PPDU to be transmitted on an RU with 242 tones is at least one of an MCS 0, an MCS 1, an MCS 2, or an MCS 15.

61. The device according to any one of claims 54 to 60, wherein the PPDU comprises a signal SIG field used for carrying information for decoding the PPDU.

62. The device according to claim 61, wherein the SIG field comprises a universal signal U-SIG field.

63. The device according to claim 62, wherein the U-SIG field comprises:
a first subfield used to indicate an RU allocation mode and RU allocation information.

64. The device according to claim 63, wherein a value of the first subfield indicates at least one of following:

    a distributed RU with 106 tones;
    a distributed MRU with 106 tones + 26 tones;
    a non-distributed RU with 106 tones;
    a non-distributed MRU with 106 tones + 26 tones;
    a non-distributed RU with 242 tones; or
    reserved.

65. The device according to claim 64, wherein the distributed RU with the 106 tones comprises tones obtained by distributed mapping of an RU with 106 tones in upper frequency domain within a 20 MHz bandwidth;

the distributed MRU with the 106 tones + the 26 tones comprises tones obtained by distributed mapping of an MRU with 106 tones + 26 tones in upper frequency domain within a 20 MHz bandwidth;
the non-distributed RU with the 106 tones comprises an RU with 106 tones in upper frequency domain within a 20 MHz bandwidth; or
the non-distributed MRU with the 106 tones + the 26 tones comprises an MRU with 106 tones + 26 tones in upper frequency domain within a 20 MHz bandwidth.

66. The device according to claim 62, wherein the U-SIG field comprises:

a second subfield used to indicate RU allocation information; and
a third subfield used to indicate an RU allocation mode.

67. The device according to claim 66, wherein a value of the second subfield indicates at least one of following:

an RU with 106 tones;
an MRU with 106 tones + 26 tones;
an RU with 242 tones; or
reserved.

68. The device according to claim 67, wherein

the RU with the 106 tones comprises an RU with 106 tones in upper frequency domain within a 20 MHz bandwidth; or
the MRU with the 106 tones + the 26 tones comprises an MRU with 106 tones + 26 tones in upper frequency domain within a 20 MHz bandwidth.

69. The device according to any one of claims 66 to 68, wherein a value of the third subfield indicates at least one of following:

a non-distributed RU allocation mode; or
a distributed RU allocation mode.

70. The device according to claim 69, wherein in a case that the second subfield indicates an RU with 242 tones, the third subfield indicates the non-distributed RU allocation mode.

71. The device according to any one of claims 62 to 70, wherein the SIG field further comprises a UHT-SIG field.

72. The device according to claim 71, wherein the UHT-SIG field comprises a fourth subfield used to indicate an MCS applied to a data domain of the PPDU.

73. The device according to claim 71 or 72, wherein the U-SIG field in the SIG field further comprises a fifth subfield used to indicate a modulation and coding scheme applied to the ultra-high throughput signal UHT-SIG field.

74. The device according to claim 73, wherein a value of the fifth subfield indicates at least one of following:

an MCS 15: BPSK-DCM, and a coding rate of 1/2; or
reserved.

75. The device according to any one of claims 63 to 70, wherein the U-SIG field further comprises:
a fourth subfield used to indicate an MCS applied to a data domain of the PPDU.

76. The device according to claim 75, wherein in a case that a value of the first subfield indicates a non-distributed RU with 106 tones, a value of the fourth subfield indicates an MCS 0 or an MCS 15; and/or
in a case that a value of the first subfield indicates a non-distributed MRU with 106 tones + 26 tones, a value of the fourth subfield indicates an MCS 0 or an MCS 15.

77. The device according to claim 75, wherein in a case that a value of a second subfield indicates an RU with 106 tones and a value of a third subfield indicates a non-distributed RU allocation mode, the fourth subfield indicates an MCS 0 or an MCS 15; and/or
in a case that a value of a second subfield indicates an MRU with 106 tones + 26 tones and a value of a third subfield indicates a non-distributed RU allocation mode, the fourth subfield indicates an MCS 0 or an MCS 15.

78. The device according to any one of claims 75 to 77, wherein a value of the fourth subfield indicates at least one of following:

an MCS 0: BPSK modulation, and a coding rate of 1/2;
an MCS 1: QPSK modulation, and a coding rate of 1/2;
an MCS 2: QPSK modulation, and a coding rate of 3/4;
an MCS 15: BPSK-DCM modulation, and a coding rate of 1/2; or
reserved.

79. The device according to any one of claims 62 to 78, wherein an orthogonal frequency division multiplexing OFDM symbol comprised in the U-SIG field is at least one of a U-SIG-1, a U-SIG-1-R, a U-SIG-2, or a U-SIG-2-R.

80. The device according to claim 79, wherein the OFDM symbol comprised in the U-SIG field is encoded by using a binary convolutional code BCC at a coding rate of 1/2.

81. The device according to claim 79 or 80, wherein the U-SIG-1 and the U-SIG-1-R carry same bit information, and the U-SIG-2 and the U-SIG-2-R carry same bit information.

82. The device according to any one of claims 79 to 81, wherein the U-SIG-1 and the U-SIG-2 are interleaved by an interleaver, and the U-SIG-1-R and the U-SIG-2-R are not interleaved by an interleaver.

83. The device according to any one of claims 79 to 82, wherein the U-SIG-1, the U-SIG-2, and the U-SIG-2-R are mapped to BPSK constellation points, and the U-SIG-1-R is mapped to a QBPSK constellation point.

84. The device according to claim 63, 64, 65, or 76, wherein the first subfield is in a U-SIG-1 of the U-SIG field.

85. The device according to claim 84, wherein the first subfield is a bandwidth subfield of the U-SIG field.

86. The device according to any one of claims 66 to 70 or claim 77, wherein the second subfield is in a U-SIG-1 of the U-SIG field.

87. The device according to claim 86, wherein the second subfield is a bandwidth subfield of the U-SIG field.

88. The device according to any one of claims 66 to 70 or claim 77, wherein the third subfield is in a U-SIG-1 of the U-SIG field.

89. The device according to claim 88, wherein the third subfield is an RU allocation mode subfield of the U-SIG field.

90. The device according to claim 73 or 74, wherein the fifth subfield is in a U-SIG-2 of the U-SIG field.

91. The device according to claim 90, wherein the fifth subfield is a UHT-SIG MCS subfield of the U-SIG field.

92. The device according to any one of claims 72 and 75 to 78, wherein the fourth subfield is in a user field of a UHT-SIG field.

93. The device according to claim 92, wherein the fourth subfield is an MCS subfield of the UHT-SIG field.

94. The device according to any one of claims 72 and 75 to 78, wherein the fourth subfield is in a U-SIG-2 of the U-SIG field.

95. The device according to claim 94, wherein the fourth subfield is an MCS subfield of the U-SIG field.

96. The device according to any one of claims 62 to 74, wherein the U-SIG field further comprises at least one of the following subfields:

a physical layer version identifier, uplink/downlink UL/DL, a basic service set BSS color, a transmission opportunity TXOP, a PPDU type and compression mode, punctured channel information, a number of UHT-SIG symbols, a cyclic redundancy code CRC, a tail Tail, or reserved.

97. The device according to any one of claims 71 to 74, wherein the UHT-SIG field further comprises at least one of the following subfields:
spatial reuse, a guard interval and long training field GI+LTF size, a number of ultra-high throughput long training field symbols, a low-density parity-check code LDPC extra symbol segment, a pre-forward error correction Pre-FEC padding factor, packet extension PE disambiguity, a number of non-orthogonal frequency division multiple access users, a station identifier STA-ID, a number of spatial streams NSSs, beamformed, coding, or reserved.

98. The device according to any one of claims 62 to 70 or any one of claims 75 to 78, wherein the U-SIG field comprises at least one of the following subfields:
a physical layer version identifier, UL/DL, a BSS color, a TXOP, spatial reuse, a PPDU type and compression mode, a GI+LTF size, a number of extremely high throughput long training field symbols, an LDPC extra symbol segment, a Pre-FEC padding factor, PE disambiguity, beamformed, coding, a CRC, or reserved.

99. The device according to any one of claims 54 to 98, wherein the PPDU further comprises at least one of the following fields: a non-high throughput short training L-STF field, a non-high throughput long training L-LTF field, an ultra-high throughput short training UHT-STF field, an ultra-high throughput long training UHT-LTF field, a non-high throughput signal L-SIG field, a data field, or a packet extension field.

100.
The device according to claim 99, wherein a power of at least one of the L-STF field, the L-LTF field, the UHT-STF field, or the UHT-LTF field is increased to a first value.

101.
The device according to claim 99 or 100, wherein dual carrier modulation DCM is applied to the data field.

102.
The device according to any one of claims 99 to 101, wherein the L-SIG field is repeatedly transmitted in time domain.

103.
The device according to any one of claims 54 to 102, wherein the PPDU is a UHT ER PPDU.

104.
The device according to any one of claims 54 to 103, wherein a bandwidth of the PPDU is 20 MHz.

105.
A communications device, comprising a processor and a memory, wherein the memory is configured to store a computer program, and the processor is configured to invoke and run the computer program stored in the memory, to cause the communications device to execute the method according to any one of claims 1 to 52.

106.
A chip, comprising a processor, configured to invoke and run a computer program in a memory, to cause a device installed with the chip to execute the method according to any one of claims 1 to 52.

107.
A computer-readable storage medium, configured to store a computer program, wherein when the computer program is run by a device, the device executes the method according to any one of claims 1 to 52.

108.
A computer program product, comprising computer program instructions, wherein the computer program instructions cause a computer to execute the method according to any one of claims 1 to 52.

109.
A computer program, wherein the computer program causes a computer to execute the method according to any one of claims 1 to 52.

FIG. 1

Variable durations per HE-LTF symbol
(Variable durations per HE-LTF symbol)

| 8 μs | 8 μs | 4 μs | 4 μs | 16 μs | 4 μs | | | | | |
|------|------|------|------|-------|------|--------|-----|--------|-------------|----|
| L-STF | L-LTF | L-SIG | RL-SIG | HE-SIG-A | HE-STF | HE-LTF | ... | HE-LTF | Data (Data) | PE |

| HE-SIG-A1 | HE-SIG-A1-R | HE-SIG-A2 | HE-SIG-A2-R |
|-----------|-------------|-----------|-------------|

FIG. 2

**300**

A communications device sends and/or receives first information,
where the first information is used for an extended range (ER)

S310

FIG. 3

Communications device 400

Communications unit
410

FIG. 4

Physical tone index

−122 −121    −112    −103    94         116  122

20 MHz

Physical tone index

−122 −121 −120 −119 −118    −17  10 MHz

106-tone RU

FIG. 5

Variable durations per UHT-LTF symbol
(Variable durations per UHT-LTF symbol)

| L-STF | L-LTF | L-SIG | RL-SIG | SIG field (SIG field) | UHT-STF | UHT-LTF | ⋯ | UHT-LTF | Data (Data) | PE |

FIG. 6

Variable durations per UHT-LTF symbol
(Variable durations per UHT-LTF symbol)

| L-STF | L-LTF | L-SIG | RL-SIG | U-SIG | UHT-SIG | UHT-STF | UHT-LTF | ⋯ | UHT-LTF | Data (Data) | PE |

FIG. 7

| U-SIG-1 | U-SIG-1-R | U-SIG-2 | U-SIG-2-R |

FIG. 8

| Common field (Common field) 20 bits (20 bits) | User field (User field) 22 bits (22 bits) | CRC 4 bits (4 bits) | Tail (Tail) 6 bits (6 bits) |
|---|---|---|---|

FIG. 9

Variable durations per UHT-LTF symbol
(Variable durations per UHT-LTF symbol)

| L-STF | L-LTF | L-SIG | RL-SIG | U-SIG | UHT-STF | UHT-LTF | ... | UHT-LTF | Data (Data) | PE |
|---|---|---|---|---|---|---|---|---|---|---|

FIG. 10

Communications device
1100

Memory
1120

Processor
1110

Transceiver 1130

FIG. 11

Chip 1200

Input
interface
1230

Processor
1210

Memory
1220

Output
interface
1240

FIG. 12

Communications system 1300

Communications
device

1310

Communications
device

1320

FIG. 13

## INTERNATIONAL SEARCH REPORT

| | International application No. |
|---|---|
| | **PCT/CN2022/095358** |

| A. | CLASSIFICATION OF SUBJECT MATTER |
|---|---|

H04W 72/04(2009.01)i;  H04W 88/12(2009.01)n

According to International Patent Classification (IPC) or to both national classification and IPC

| B. | FIELDS SEARCHED |
|---|---|

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPABSC; CNTXT; WPABS; ENTXT; CJFD; DWPI; ENTXTC; VEN: 物理层协议数据单元, PPDU, 扩展, 拓展, 范围, extended range, ER, 子载波, 调制编码方案, MCS, 资源单元, RU

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021282146 A1 (SAMSUNG ELECTRONICS CO., LTD.) 09 September 2021 (2021-09-09)<br>description, paragraphs [0043]-[0202] | 1-109 |
| X | US 2020413482 A1 (CANON K. K.) 31 December 2020 (2020-12-31)<br>description, paragraphs [0017]-[0102] | 1-109 |
| X | WO 2021225388 A1 (WILUS INSTITUTE OF STANDARDS AND TECHNOLOGY INC.)<br>11 November 2021 (2021-11-11)<br>description, paragraphs [0078]-[0275] | 1-109 |
| X | CN 113491091 A (CANON INC.) 08 October 2021 (2021-10-08)<br>description, paragraphs [0048]-[0078] | 1, 2, 47, 53, 54, 99, 105-109 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 October 2022** | **08 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div style="text-align:center">

**INTERNATIONAL SEARCH REPORT**
**Information on patent family members**

</div>

| International application No. |
|---|
| **PCT/CN2022/095358** |

| Patent document cited in search report | | | Publication date (day/month/year) | Patent family member(s) | | | Publication date (day/month/year) |
|---|---|---|---|---|---|---|---|
| US | 2021282146 | A1 | 09 September 2021 | TW | 202139639 | A | 16 October 2021 |
| | | | | EP | 3876469 | A1 | 08 September 2021 |
| US | 2020413482 | A1 | 31 December 2020 | JP | 2021010059 | A | 28 January 2021 |
| WO | 2021225388 | A1 | 11 November 2021 | | None | | |
| CN | 113491091 | A | 08 October 2021 | WO | 2020175044 | A1 | 03 September 2020 |
| | | | | US | 2021367714 | A1 | 25 November 2021 |
| | | | | JP | 2020141302 | A | 03 September 2020 |

Form PCT/ISA/210 (patent family annex) (January 2015)